(19) Europäisches Patentamt
European Patent Office
Office européen des brevets

(11) EP 2 385 085 B1

(12) EUROPEAN PATENT SPECIFICATION

(45) Date of publication and mention of the grant of the patent:
**18.01.2017 Bulletin 2017/03**

(51) Int Cl.:
***C09D 183/04*** *(2006.01)* ***C09J 7/02*** *(2006.01)*

(21) Application number: **11165208.7**

(22) Date of filing: **06.05.2011**

(54) **Primer silicone composition and treated paper or film for release paper or film**

Silikon-Primerzusammensetzung und behandeltes Papier oder behandelte Folie für Trennpapier oder -folie

Composition de silicone d'apprêt et papier ou film traité pour papier ou film détachable

(84) Designated Contracting States:
**DE FI FR GB NL**

(30) Priority: **07.05.2010 JP 2010107227**

(43) Date of publication of application:
**09.11.2011 Bulletin 2011/45**

(73) Proprietor: **Shin-Etsu Chemical Co., Ltd.**
**Tokyo (JP)**

(72) Inventors:
- **Yamamoto, Kenji**
  **Annaka-shi Gunma (JP)**
- **Aoki, Shunji**
  **Annaka-shi Gunma (JP)**

(74) Representative: **Stoner, Gerard Patrick**
**Mewburn Ellis LLP**
**City Tower**
**40 Basinghall Street**
**London EC2V 5DE (GB)**

(56) References cited:
**EP-A2- 0 764 703**
**US-A1- 2003 104 224**
**US-B1- 6 277 941**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 385 085 B1

## Description

### TECHNICAL FIELD

This invention relates to a primer silicone composition and a paper or film substrate treated therewith, suited for the preparation of release paper or film having improved adhesion.

### BACKGROUND

It is well known from the past that release liners having release properties relative to sticky materials, typically pressure-sensitive adhesives are prepared by forming a cured coating having release properties on the surface of substrates such as paper, laminated paper and plastic film. Among the materials used for forming a cured coating having release properties are silicone compositions. For example, JP-A S62-86061 discloses a silicone composition comprising an alkenyl-containing organopolysiloxane, an organohydrogenpolysiloxane, and a platinum base compound.

Silicone compositions of this type are still predominant at the present because of their cure behavior and pot life. However, a problem has been pointed out that the adhesion between the cured coating and the substrate is not regarded sufficient. This poses limitation on the type of substrate that can be coated and necessitates pretreatment of the substrate.

Under the recent trend of available substrates, the use of plastic film substrates is increasing because of uniform and stable quality, high smoothness, and film thinness. As a wide variety of substrates are now available in the market, the requirement to improve the adhesion of silicone compositions to substrates becomes more desirable than ever.

Proposals for improving adhesion have also been made from the side of silicone compositions. For example, one attempt to use more adhesive materials includes blending of organic resins and addition of silane coupling agents. However, this attempt is utilized only under limited conditions because release properties are otherwise degraded. Another method is to modify the base polymer structure of the silicone composition. Base polymers having a branched structure containing $RSiO_{3/2}$ units are disclosed in JP-A S63-251465, JP-B H03-19267, JP-A H09-78032, and JP-A H11-193366. This method is mainly intended for light release upon high-speed peeling and for effective cure while some improvement in adhesion is achieved as a secondary effect. Also JP-A 2000-169794 and JP-A 2000-177058 propose the combined use of a solvent type silicone composition and a solventless silicone composition, thereby achieving the effect of reducing peeling speed dependence without modifying the base polymer structure. With respect to adhesion, this proposal does not surpass the existing solvent type silicone compositions.

As discussed above, there is available in the art no appropriate technique capable of improving the adhesion of a silicone composition without affecting the release properties thereof.

### Citation List

Patent Document 1: JP-A S62-86061
Patent Document 2: JP-A S63-251465
Patent Document 3: JP-B H03-19267
Patent Document 4: JP-A H09-78032
Patent Document 5: JP-A H11-193366
Patent Document 6: JP-A 2000-169794
Patent Document 7: JP-A 2000-177058

An aim herein is to provide new and useful primer compositions, which form a primer layer on a surface of a substrate such as paper or plastic film, and allow a release silicone composition to be coated and cured thereon to form a cured coating of the release silicone composition which is tenaciously adherent to the substrate surface, yielding a release paper or film. Other aspects are a treated paper or film substrate which has been treated with the primer composition, and the silicone-coated release paper or film. Also, corresponding methods and use.

The inventors have found that a composition consisting of an adhesion-providing component which is an alkenyl-containing siloxane of specific structure and/or a compound containing a substituent group having a functional group capable of radical reaction upon exposure to heat and/or UV and a substituent group having a group capable of reaction with alkenyl and/or SiH group is useful as a primer when a release silicone composition is coated and cured onto a paper or plastic film substrate to form a release paper or film because the primer layer helps the cured coating of the release silicone composition adhere to the substrate surface. As opposed to the prior art techniques of improving adhesion at more or less sacrifice of release properties, the use of the primer can improve the adhesion of a release

silicone composition without substantial impact on release properties. Accordingly, the invention provides a silicone primer composition, a treated paper or film substrate as an intermediate product, a release paper or film, as defined below, and methods of making these.

In one aspect, the invention provides a primer composition for silicone which is in use coated on a paper or plastic film substrate and exposed to UV to form a primer layer which will be overlaid with a cured coating of a release silicone composition to form a release paper or film, the primer silicone composition consisting of (A) an adhesion-providing component which is (A1) an organopolysiloxane containing at least two silicon-bonded alkenyl-containing substituent groups in a molecule, having an alkenyl content of 0.3 to 2.0 mol/100 g, and having a structure that two siloxane units in which the alkenyl-containing substituent group is bonded to silicon atom are linked directly or via up to 3 intervening siloxane units in which said substituent group is not bonded to silicon atom, the organopolysiloxane having a viscosity of less than 0.04 Pa-s at 25°C, and/or (A2) a compound containing in a molecule at least one substituent group of 2 to 10 carbon atoms having a carbon-carbon unsaturated bond (double or triple bond) as functionality and at least one substituent group having a group capable of addition reaction and/or condensation reaction with an alkenyl and/or SiH group, and (B) an amount of an optional organic solvent.

In a preferred embodiment, component (A1) is an organopolysiloxane having an average degree of polymerisation of 2 to 50. Preferably it is represented by the compositional formula (1), including a structure of the general formula (2).

$$[M]_{m1}[M^A]_{m2}[D]_{d1}[D^A]_{d2}[T]_{t1}[T^A]_{t2}[Q]_{q1} \qquad (1)$$

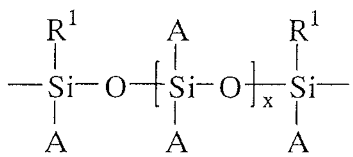

(2)

Herein $R^1$ is an alkenyl-containing substituent group of 2 to 10 carbon atoms, A is $R^2$ or a siloxane residue bonded via an oxygen atom and selected so as to meet formula (1), two A groups connected to one silicon atom may form a cyclic structure as $-O(SiR^2{}_2O)_y-$, $R^2$ is a substituted or unsubstituted monovalent hydrocarbon group of 1 to 10 carbon atoms, x is an integer of 0 to 3, y is an integer selected such that the organopolysiloxane of formula (1) may have an average degree of polymerization of 2 to 50.

M, $M^A$, D, $D^A$, T, $T^A$, and Q are siloxane units as defined below, $O_{1/2}$ denoting that adjacent siloxane units are linked via an oxygen atom,

M and $M^A$ each are:

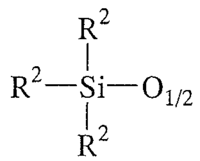

,

with the proviso that at least one $R^2$ in $M^A$ is $R^1$,

D and $D^A$ each are:

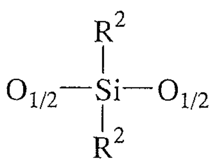

,

with the proviso that at least one $R^2$ in $D^A$ is $R^1$,

T and $T^A$ each are:

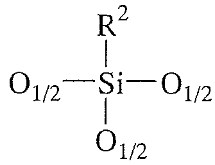
,

with the proviso that $R^2$ in $T^A$ is $R^1$,
Q is :

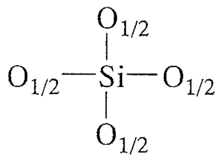
,

m1, m2, d1, d2, t1, t2, and q1 are numbers satisfying the equations:

$$t1+t2+2\times q1 \le m1+m2 \le 2+t1+t2+2\times q1$$

$$0 \le d1+d2 \le 48,\ 0 \le t1+t2 \le 30,\ 0 \le q1 \le 20,$$

$$0.25 \le (m2+d2+t2)/(m1+m2+d1+d2+t1+t2+q1) \le 1.$$

Preferably, x in formula (2) is 0 or 1.

In a preferred embodiment, component (A1) is a compound of linear or branched siloxane structure having the general formula (3) or (4).

General formula (3) is as follows.

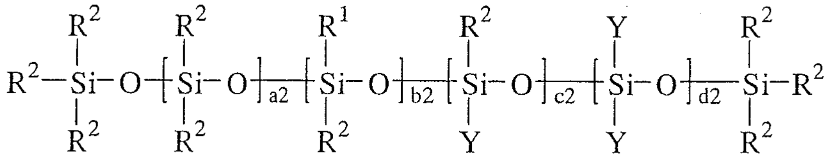
(3)

Herein $R^1$ and $R^2$ are as defined above, Y is a group of the following formula (3a):

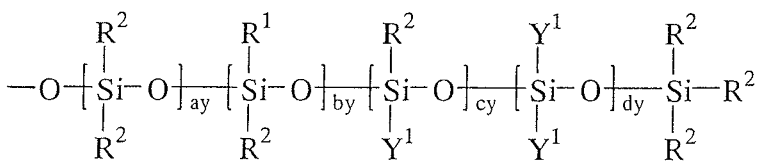
(3a)

wherein $R^1$ and $R^2$ are as defined above, $Y^1$ is a group of the following formula (3b):

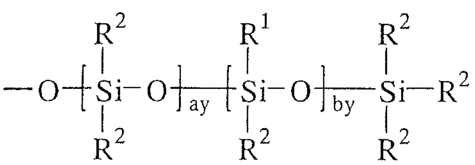
(3b)

wherein $R^1$ and $R^2$ are as defined above, a2, b2, ay, and by each are an integer of 0 to 48, c2 and cy each are an integer of 0 to 30, d2 and dy each are an integer of 0 to 20, formulae (3), (3a) and (3b) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

General formula (4) is as follows.

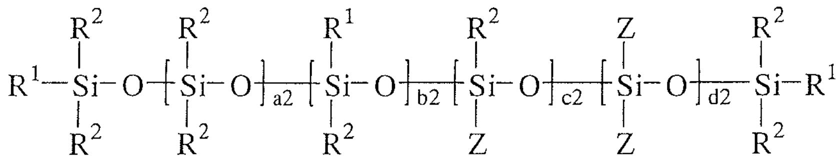

(4)

Herein $R^1$ and $R^2$ are as defined above, Z is a group of the following formula (4a):

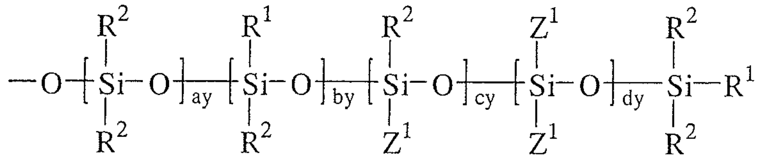

(4a)

wherein $R^1$ and $R^2$ are as defined above, $Z^1$ is a group of the following formula (4b):

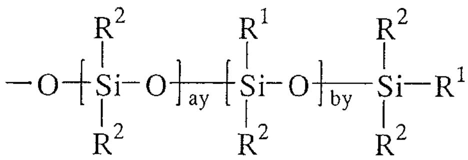

(4b)

wherein $R^1$ and $R^2$ are as defined above, a2, b2, ay, and by each are an integer of 0 to 48, c2 and cy each are an integer of 0 to 30, d2 and dy each are an integer of 0 to 20, formulae (4), (4a) and (4b) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

In another preferred embodiment, component (A1) is a compound of cyclic siloxane structure having the general formula (5).

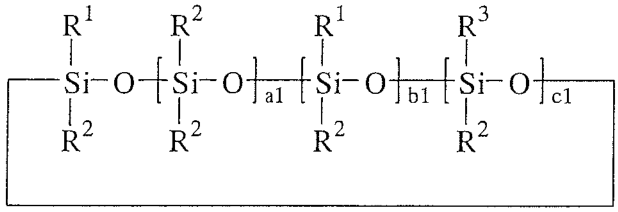

(5)

Herein $R^1$ and $R^2$ are as defined above, $R^3$ is a substituent group having an OH or SiH group as functionality or a substituted or unsubstituted monovalent hydrocarbon group of 1 to 10 carbon atoms free of aliphatic unsaturation, a1 is 0 or 1, b1 is an integer of 1 to 6, c1 is an integer of 0 to 5, and a1+b1+c1 is an integer of at least 2.

With reference to alternative or additional component (A2) preferably the substituent having a carbon-carbon unsaturated bond (double or triple bond) is a substituent group having alkenyl, alkynyl, acryloyloxy or methacryloloxy. The substituent group having a group capable of addition reaction and/or condensation reaction with an alkenyl and/or SiH group is preferably a group having a SiH, OH or alkenyl group as functionality.

Also preferably, in component (A2), the substituent group having a carbon-carbon unsaturated bond (double or triple bond) is a substituent group of 2 to 10 carbon atoms having alkynyl, acryloyloxy or methacryloloxy. The substituent group having a group capable of addition reaction and/or condensation reaction with an alkenyl and/or SiH group is a substituent group having a SiH, OH or alkenyl group as functionality.

In a preferred embodiment, component (A2) is a compound containing a divalent structural unit having the

general formula (6-1), a compound containing divalent structural units having the general formulae (6-2) and (6-3), a compound of cyclic structure having the general formula (7-1), or a compound of cyclic structure having the general formula (7-2).

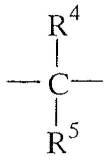
(6-1)

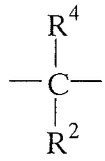
(6-2)

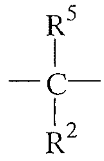
(6-3)

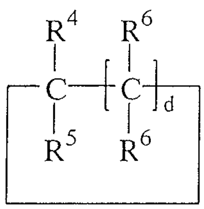
(7-1)

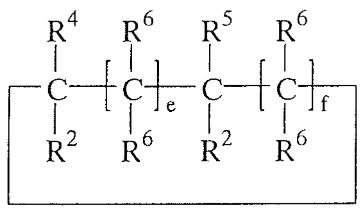
(7-2)

Herein $R^2$ is a substituted or unsubstituted monovalent hydrocarbon group of 1 to 10 carbon atoms, $R^4$ is a substituent group of 2 to 10 carbon atoms containing alkynyl, acryloyloxy or methacryloyloxy, $R^5$ is a substituent group having an OH, SiH or alkenyl group as functionality, $R^6$ is hydrogen, a saturated hydrocarbon group of 1 to 10 carbon atoms or aromatic group, the same group as $R^4$, or the same group as $R^5$, d is 4 to 10, and e+f is 3 to 9.

In a preferred embodiment, the release silicone composition is of addition and condensation reaction cure type.

The primer silicone composition may further comprise some or all of components of the release silicone composition.

In another aspect, the invention provides a treated paper or film substrate obtained by coating a surface of a paper or film substrate with the primer silicone composition defined above and exposing to UV radiation, wherein the treated surface will be overlaid with a cured coating of a release silicone composition to form a release paper or film.

In a further aspect, the invention provides a release paper or film comprising the treated paper or film substrate and a release silicone composition coated and cured to the treated substrate surface.

ADVANTAGEOUS EFFECT

According to the invention, a primer silicone composition consisting of an adhesion-providing component of specific structure is coated onto a paper of plastic film substrate and exposed to UV radiation to form a primer layer, before a conventional release silicone composition is coated and cured onto the substrate. The primer layer improves the adhesion between the release silicone coating and the substrate. Relative to the prior art techniques of improving adhesion at more or less sacrifice of release properties, we find that these primers can improve adhesion without substantial impact on release properties.

FURTHER EXPLANATIONS; OPTIONS AND PREFERENCES

Primer silicone composition

The primer silicone composition of the invention consists of (A) an adhesion-providing component which is component (A-1) and/or (A-2) as defined below and optionally, (B) an organic solvent. The primer silicone composition is coated onto a paper or plastic film substrate and exposed to UV radiation to form a primer layer. Thereafter, a conventional release silicone composition is coated and cured onto the substrate, yielding a release paper or film having improved adhesion.

Component (A) is a characteristic component for the primer silicone composition to enhance adhesion as the primer. It functions like a coupling agent capable of coupling the substrate and a non-tacky cured coating of a release silicone composition, thereby improving adhesion. If only one type of reaction is utilized for reaction or interaction with

the substrate and the non-tacky cured coating made of essentially different materials, the reaction tends to be biased to either one side whereby the relevant component may not fully function as the coupling agent. In the present compositions a radical reaction can be assigned to the reaction or interaction with the substrate whereas addition or condensation reaction is assigned to the reaction or interaction with the non-tacky cured coating.

Component (A) must serve such that a single molecule may accommodate these two different reactions. One approach to this goal is to provide one molecule solely with substituent groups of the same type containing only a functional group capable of the reactions. Although the reaction selectivity by the substituent group is low, two reactions can proceed, without undue biasing, by appropriately selecting characteristics of the molecular structure. The organosiloxane corresponding to this approach is component (A1).

Another approach is to provide one molecule with both a substituent group capable of radical reaction with the substrate rather than addition or condensation reaction, and another substituent group capable of addition or condensation reaction with the non-tacky cured coating of release silicone composition rather than radical reaction. The compound corresponding to this approach is component (A2).

Component (A) may be component (A1) or (A2) or a mixture of components (A1) and (A2). Components (A1) and (A2) may be mixed preferably in a weight ratio (A1):(A2) from 100:0 to 100:100, more preferably from 100:0 to 100:90, although the mixing ratio may be suitably adjusted in accordance with the desired level of adhesion, the type of substrate, and curing conditions. When a mixture of components (A1) and (A2) is used, the weight ratio (A1):(A2) preferably ranges from 100:5 to 100:100.

Since component (A1) does not require that a plurality of different functional groups be incorporated within one molecule as in component (A2), it is easy to prepare and advantageous in availability and cost. In addition, since component (A1) is a silicone compound similar to the main component of the release silicone composition to be overcoated, it is advantageous for reaction or interaction with the non-tacky cured coating. Although this feature is detrimental to reaction or interaction with the surface of a substrate of organic material, it is compensated for by the following. This component is previously coated on the substrate as the primer and exposed to UV radiation whereby radical reaction takes place earlier. The vicinal juxtaposition of alkenyl groups as shown in formula (1) ensures that alkenyl groups are concentrated within a short siloxane chain to increase the organic nature of the functional portion. The resulting structure is advantageous for radical reaction with the substrate.

Component (A1) is an organopolysiloxane having a structure that two siloxane units in which an alkenyl-containing substituent group is bonded to silicon atom are linked directly or via up to 3 intervening siloxane units in which the alkenyl-containing substituent group is not bonded to silicon atom.

Specifically, the organopolysiloxane as component (A1) may be represented by the compositional formula (1) having a structure of the general formula (2).

$$[M]_{m1}[M^A]_{m2}[D]_{d1}[D^A]_{d2}[T]_{t1}[T^A]_{t2}[Q]_{q1} \qquad (1)$$

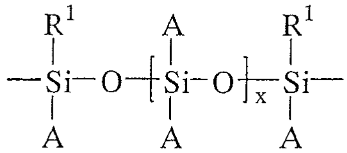

(2)

Herein $R^1$ is an alkenyl-containing substituent group of 2 to 10 carbon atoms, A is $R^2$ or a siloxane residue bonded via an oxygen atom and selected so as to meet formula (1), two A groups connected to one silicon atom may form a cyclic structure as $-O(SiR^2{}_2O)_y-$, $R^2$ is a substituted or unsubstituted monovalent hydrocarbon group of 1 to 10 carbon atoms, x is an integer of 0 to 3, y is an integer selected such that the organopolysiloxane of formula (1) may have an average degree of polymerization of 2 to 50.

M, $M^A$, D, $D^A$, T, $T^A$, and Q are siloxane units as defined below, $O_{1/2}$ denoting that adjacent siloxane units are linked via an oxygen atom.

M and $M^A$ each are:

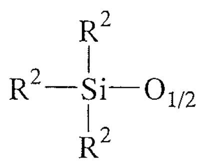

,

with the proviso that at least one $R^2$ in $M^A$ is $R^1$.
D and $D^A$ each are:

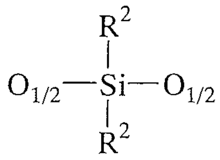
,

with the proviso that at least one $R^2$ in $D^A$ is $R^1$.
T and $T^A$ each are:

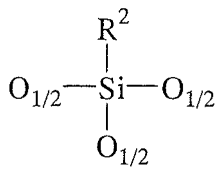
,

with the proviso that $R^2$ in $T^A$ is $R^1$.
Q is:

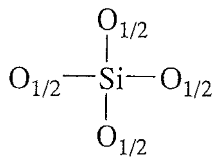
.

The subscripts m1, m2, d1, d2, t1, t2, and q1 are numbers satisfying the equations:

$$t1+t2+2\times q1 \le m1+m2 \le 2+t1+t2+2\times q1$$

$$0 \le d1+d2 \le 48,\ 0 \le t1+t2 \le 30,\ 0 \le q1 \le 20,$$

$$0.25 \le (m2+d2+t2)/(m1+m2+d1+d2+t1+t2+q1) \le 1.$$

Examples of the alkenyl-containing substituent group represented by $R^1$ include alkenyl groups such as vinyl and allyl, and (meth)acryloyloxy-substituted alkyl groups such as acryloyloxypropyl and methacryloyloxypropyl.

Suitable monovalent organic groups represented by $R^2$ include unsubstituted monovalent hydrocarbon groups, for example, straight, branched or cyclic alkyl groups such as methyl, ethyl, propyl and hexyl, aryl groups such as phenyl and tolyl, aralkyl groups such as benzyl, and alkenyl groups such as vinyl and allyl, and substituted forms of the foregoing monovalent hydrocarbon groups in which some or all hydrogen atoms are substituted by halogen atoms, and substituted forms of the alkyl groups in which a hydrogen atom is substituted by (meth)acryloyloxy, such as (meth)acryloyloxypropyl. Accordingly, $R^2$ may be $R^1$.

A is $R^2$ or a siloxane residue bonded via an oxygen atom and selected consistently with formula (1), for example, methyl, ethyl, propyl, vinyl, allyl, (meth)acryloxypropyl, $-O-Si(CH_3)_2(CH)=(CH_2)$, $-O-Si(CH_3)_3$, $-O-Si(CH_3)_2(C_6H_5)$, methoxy, ethoxy, and propoxy groups. Two A groups connected to one silicon atom may form a cyclic structure as $-O(SiR^2{}_2O)_y-$ wherein $R^2$ and y are as defined above. More specifically,

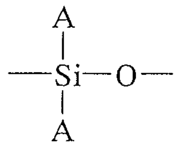

may be a group of

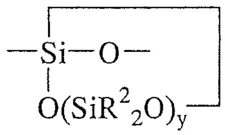

.

Component (A1) has an average degree of polymerization of 2 to 50, preferably 2 to 40, as measured by gel permeation chromatography (GPC) versus polystyrene standards. The subscript y is an integer selected such that the organopolysiloxane of formula (1) may have an average degree of polymerization within the range. Specifically, y is preferably an integer of 0 to 10, more preferably 1 to 8.

As seen from formula (2), the organosiloxane as component (A1) has a structure that two -Si$R^1$A- groups are linked via -O-($SiA_2O$)$_x$- wherein x is 0 to 3, preferably 0 or 1. Namely, two -Si$R^1$A- groups having a silicon-bonded alkenyl group are juxtaposed in vicinity. When A is alkenyl, such groups are juxtaposed in close vicinity as a matter of course. Even when A is an alkyl group such as methyl or an aryl group such as phenyl, two -Si$R^1$A- groups are juxtaposed in vicinity. The subscript x representative of an extent of vicinity is at most 3, preferably 0 or 1, within which range the effect of the invention are achievable. If x is 4 or more, adhesion declines, failing to achieve the effect of improving adhesion without an impact on release performance.

Another effect expectable from the vicinal juxtaposition of alkenyl groups is that radical reaction proceeds predominantly while addition reaction is retarded. This effect becomes more significant when x is 0 or 1. The reason why the vicinal juxtaposition of alkenyl groups retards addition reaction is analogized from the fact that a compound of the identical structure can be utilized as an inhibitor. Once one alkenyl group is altered by radical reaction, the remaining alkenyl group becomes available for addition reaction, whereby reaction with the non-tacky cured coating takes place. In this way, the organosiloxane fully functions as the coupling agent.

If possible, the organosiloxane preferably contains at least three alkenyl groups, more preferably at least four alkenyl groups per molecule so that all alkenyl groups may not be consumed solely by the radical reaction. A low molecular weight is advantageous for the organosiloxane to function as the coupling agent because more bond sites are available over a wide area.

Examples of the organosiloxane having the structure of formula (1) include linear or branched organopolysiloxanes having the following formula (3) or (4).

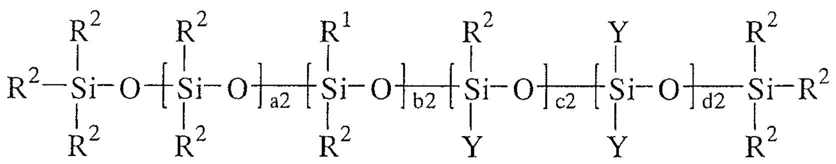

(3)

Herein $R^1$ and $R^2$ are as defined above, Y is a group of the following formula (3a):

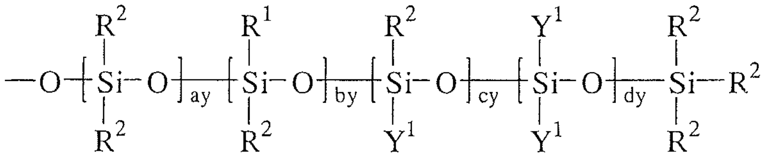

(3a)

wherein $R^1$ and $R^2$ are as defined above. $Y^1$ is a group of the following formula (3b):

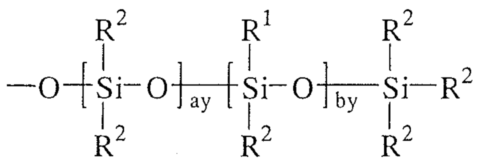

(3b)

wherein $R^1$ and $R^2$ are as defined above.

The subscripts a2, b2, ay, and by each are an integer of 0 to 48, preferably 0 to 45, more preferably 0 to 40, c2 and cy each are an integer of 0 to 30, preferably 0 to 25, more preferably 0 to 20, d2 and dy each are an integer of 0 to 20, preferably 0 to 18, more preferably 0 to 15.

Formulae (3), (3a) and (3b) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

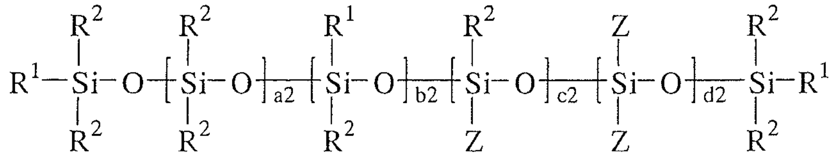

(4)

Herein $R^1$ and $R^2$ are as defined above, Z is a group of the following formula (4a):

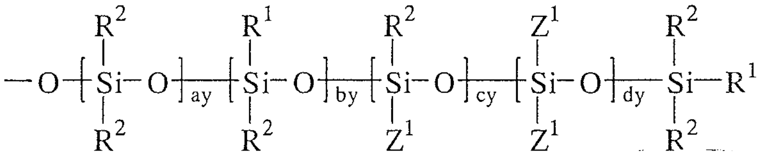

(4a)

wherein $R^1$ and $R^2$ are as defined above. $Z^1$ is a group of the following formula (4b):

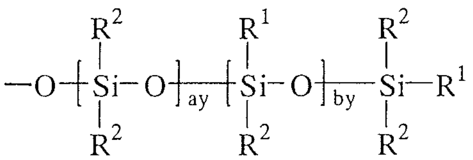

(4b)

wherein $R^1$ and $R^2$ are as defined above.

The subscripts a2, b2, ay, and by each are an integer of 0 to 48, preferably 0 to 45, more preferably 0 to 40, c2 and cy each are an integer of 0 to 30, preferably 0 to 25, more preferably 0 to 20, d2 and dy each are an integer of 0 to 20, preferably 0 to 18, more preferably 0 to 15.

Formulae (4), (4a) and (4b) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

Illustrative structures as component (A1) include linear organopolysiloxanes having the following formula:

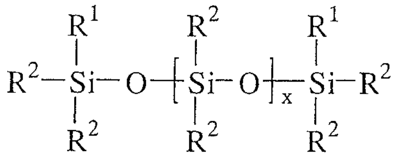

wherein x is as defined above. Also included are organopolysiloxanes of branched structure having a backbone of tri- or tetra-functional siloxane units, of the following formulae.

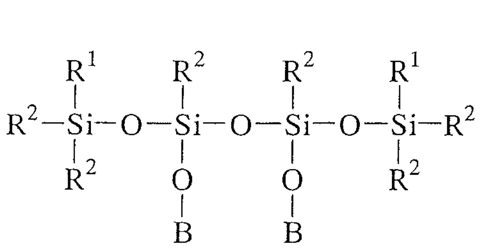

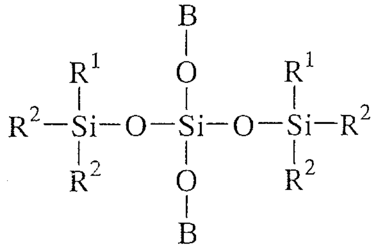

Examples of the siloxane residue A, Y, Z, and B are given below.

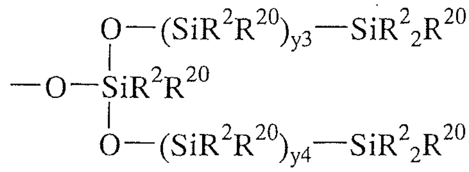

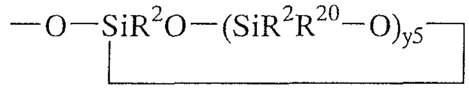

Herein $R^{20}$ is $R^2$ or $R^1$, $R^0$ is $-O-(SiR^2R^{20})_{y6}-SiR^2{}_2R^{20}$, y is as defined above, y1+y2+y6 = y, y1 and y6 each are an integer of at least 0, y2 is an integer of at least 1, y3+y4 = y, y3 and y4 each are an integer of at least 0, and y5 = y.

More specific examples are given below.

$-OSi(CH_3)_3$

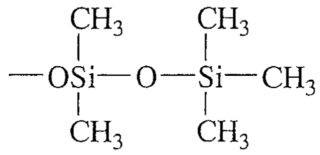

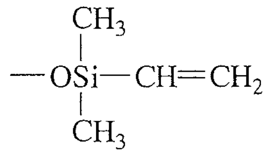

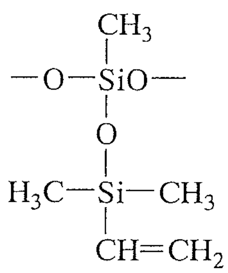

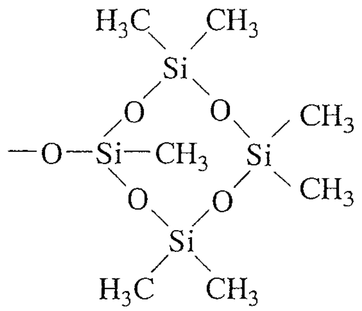

Component (A1) may also be an organopolysiloxane of cyclic structure having the general formula (5), which minimizes the influence of siloxane structure and is more advantageous for radical reaction.

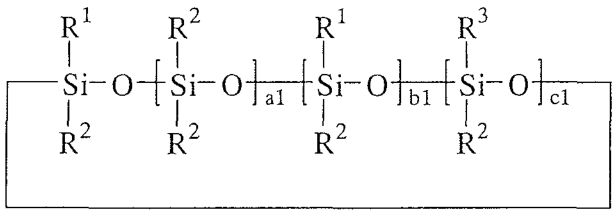

(5)

Herein $R^1$ and $R^2$ are as defined above, $R^3$ is a substituent group having an OH or SiH group as functionality or a substituted or unsubstituted monovalent hydrocarbon group of 1 to 10 carbon atoms free of aliphatic unsaturation, a1 is 0 or 1, b1 is an integer of 1 to 6, c1 is an integer of 0 to 5, and a1+b1+c1 is an integer of at least 2.

In formula (5), examples of the substituent group having an OH or SiH group as functionality, represented by

$R^3$, include silicon-bonded hydroxyl, silicon-bonded hydrogen, $-CH_2CH_2CH_2-O-CH_2CH_2-OH$, and the like. Examples of the monovalent hydrocarbon group represented by $R^3$ include those exemplified above for $R^2$, with alkenyl groups being excluded.

Industrially desirable as component (A1) are those siloxanes of formula (5) wherein $R^1$ is vinyl, $R^2$ is methyl, $R^3$ is hydrogen, a1 is 0 to 1, b1 is 1 to 4, and c1 is 0 to 1, and more desirably a1=O, b1=2 to 4, and c1=0.

It is noted that component (A1) is an organosiloxane having a high alkenyl content, preferably of 0.3 to 2.0 mol/100 g, more preferably 0.4 to 1.5 mol/100 g. When the organosiloxane has a low molecular weight corresponding to a low degree of polymerization so that it may have an absolute viscosity of less than 0.04 Pa-s at 25°C as measured by a rotational viscometer, it is more susceptible to reaction or interaction with the substrate. If possible, the organosiloxane preferably contains at least three alkenyl groups, more preferably at least four alkenyl groups per molecule so that all alkenyl groups may not be consumed solely by the radical reaction. It is noted that the lower limit of the absolute viscosity is usually 0.1 mPa-s, though not critical.

Component (A2) is a compound containing in a molecule at least one substituent group of 2 to 10 carbon atoms, preferably 2 to 8 carbon atoms, having a carbon-carbon unsaturated bond (double or triple bond) as functionality, and at least one substituent group having a group capable of addition reaction and/or condensation reaction with an alkenyl group and/or a silicon-bonded hydrogen atom (i.e., SiH group).

The compound as component (A2) possesses at least one substituent group having a carbon-carbon unsaturated bond as functionality, which indicates a substituent group having a functional group capable of radical reaction upon exposure to heat and/or UV. The structure of this substituent group may be either linear or branched, or even a cyclic structure such as cyclohexene or norbornadiene may be used. Any substituent group having a functional group as commonly used in radical polymerization or radical reaction curing systems may be used. Where component (A2) contains a siloxane structure, the substituent group should preferably be a substituent group having a carbon-carbon double bond such as methacryloyloxy or a carbon-carbon triple bond such as acetylene, propynyl or butynyl, especially for restraining consumption by addition reaction.

In a relative sense, the structure of component (A1) is susceptible to reaction and interaction with an overlying release silicone composition whereas the structure of component (A2) is advantageous for reaction and interaction with a substrate composed mainly of organic material. Although the desired effect is obtainable with component (A1) or (A2) alone, better effects are achievable over a wider variety of substrates using a mixture of components (A1) and (A2). When such a mixture is used, component (A2) of siloxane structure should desirably have a lower molecular weight and a lower degree of polymerization which is specifically up to 40, more specifically 1 to 10.

Where component (A2) is an organic compound free of siloxane structure, it makes an easy access to the substrate and is advantageous for reaction or interaction with the substrate via radical reaction, allowing a choice of the substituent group from a wider range. However, a non-silicone compound having a higher molecular weight has an inferior wettability with the overlying silicone thereby resulting in an inferior adhesion. Therefore, the organic compound should preferably have a number average molecular weight of up to 1,000 as measured by GPC versus polystyrene standards. In order for the organic compound to function as a coupling agent more efficiently for improving adhesion, a lower molecular weight is desirable since more bond sites are available over a wide area.

In component (A2), the substituent group having a functional group capable of radical reaction upon exposure to heat and/or UV functions such that component (A2) is anchored to the substrate surface where the composition is coated, through radical reaction and/or interaction with a group created by radical reaction. Creation of radicals may be attained by heat or irradiation of energy ray such as UV. Alternatively a radical generator such as peroxide or a photosensitizer may be added for the purpose of promoting radical creation insofar as the advantages of the invention are not impaired.

Since the substrate is made of organic material, there are present on the substrate numerous structures capable of generating radicals upon exposure to heat or UV or numerous structures capable of reacting with radicals thus generated. In addition, the substrate has an extremely high rate of absorption of IR or UV radiation as the radical-generating energy source. Thus radicals can be concentratedly generated on the substrate, which is apt to promote reaction with the substrate.

In the case of heat-sensitive substrates such as plastic film, the radical creation technique based on UV irradiation is advantageous in that the temperature of the film substrate is not so elevated. Using UV radiation, the majority of which is absorbed by the film substrate surface, radicals can be concentratedly generated in proximity to the film substrate surface, which is desirable to promote reaction with the film substrate.

The compound as component (A2) also possesses at least one second substituent group. It is a substituent group having a functional group capable of reaction with an alkenyl group and/or SiH group. It is assumed that the alkenyl group is the functional group that the main component of the overcoating release silicone composition has and the SiH group is a functional group that the crosslinker has, provided that the overcoating release silicone composition is of addition reaction cure type. Suitable substituent groups include those having a SiH group capable of addition reaction with the alkenyl group, and those having an OH group capable of condensation reaction or a carbon-carbon double

bond capable of addition reaction with the SiH group.

The second substituent group in component (A2) functions such that component (A2) is anchored to the non-tacky cured coating through addition and condensation reactions different from the radical reaction of the first substituent group. With this combined with the action of the substituent group for radical reaction, component (A2) functions as a coupling agent of anchoring the non-tacky cured coating and the substrate to each other, thereby improving adhesion.

Where component (A2) is an organic compound free of siloxane structure, it rather favors radical reaction with the substrate. If a substituent group having a carbon-carbon double bond as a functional group capable of reaction with an alkenyl group and/or SiH group is selected, then it is mostly consumed by radical reaction. As a result, fewer substituent groups are available for addition reaction with the SiH group, with the risk of component (A2) failing to function as the coupling agent. To avoid such inconvenience, a SiH group or hydroxyl group unsusceptible to radical reaction is selected. For example, the compound may be a molecular structure containing a divalent structure having the general formula (6-1), or two divalent structures having the general formulae (6-2) and (6-3).

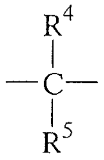
(6-1)

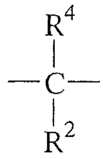
(6-2)

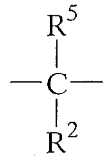
(6-3)

Herein $R^2$ is as defined above, $R^4$ is a substituent group of 2 to 10 carbon atoms, preferably 2 to 8 carbon atoms, containing alkynyl (e.g., acetylene, propynyl or butynyl), acryloyloxy or methacryloyloxy, and $R^5$ is a substituent group having an OH, SiH or alkenyl group as functionality. Of these structures, an industrially desirable example is $HC{\equiv}C\text{-}C(CH_3)_2\text{-}OH$.

Also included are cyclic structures having the general formulae (7-1) and (7-2).

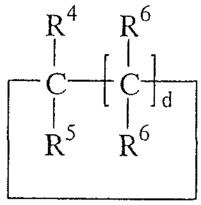
(7-1)

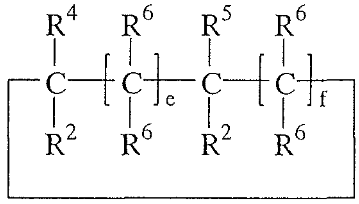
(7-2)

Herein $R^4$ and $R^5$ as defined above, $R^6$ is hydrogen, a saturated hydrocarbon group of 1 to 10 carbon atoms, preferably 1 to 8 carbon atoms, or aromatic group, the same group as $R^4$, or the same group as $R^5$, d is 4 to 10, and e+f is 3 to 9. Of these structures, an industrially desirable example is ethynyl cyclohexanol.

Both components (A1) and (A2) are commonly advantageous in that their molecular weight is low. However, a compound having a very low molecular weight has a risk that it will rapidly volatilize off from the substrate prior to any reaction when the primer composition is coated and heated on the substrate. It is thus desired that component (A) have such a molecular weight that its boiling point may be at least 80°C. For mitigating thermal impact, UV irradiation is effective because the temperature is not elevated.

Component (B) is an organic solvent which is optionally added to the primer silicone composition for the purposes of improving the applicability to various substrates and adjusting the coating weight and viscosity of the composition. Suitable organic solvents include toluene, xylene, ethyl acetate, acetone, methyl ethyl ketone, and hexane. Any other organic solvents may be used as long as component (A) can be uniformly dissolved therein. When blended, the organic solvent is used in an amount of 1 to 99,900 parts, preferably 100 to 10,000 parts by weight per 100 parts by weight of component (A). Note that component (B) is optional. Absent component (B), the viscosity of components is changed to adjust an overall viscosity such that the resulting composition may be effectively coated by an applicator.

The primer silicone composition may be prepared simply by mixing components (A) and (B) until uniform.

If desired, additives including a photosensitizer, radical generator, leveling agent, and wetter may be added to the primer silicone composition insofar as the advantages of the invention are not impaired. Also some or all of the components of the release silicone composition to be described later may be added to the primer silicone composition

insofar as the advantages of the invention are not impaired.

The primer silicone composition is coated onto a substrate such as paper or plastic film directly or after diluting with a suitable organic solvent, by any well-known coating techniques, for example, using a bar coater, roll coater, reverse coater, gravure coater, air knife coater, or if thin-film coating is desired, a high-precision offset coater or multi-stage roll coater. Examples of the substrate include paper sheets such as glassine paper, polyethylene-laminated paper, kraft paper, clay-coated paper, and mirror-coated paper, and plastic films of polypropylene, polyethylene, polyethylene terephthalate (PET), polyvinyl chloride and the like.

The coating weight of the primer silicone composition on the substrate varies with the type of the substrate material. The preferred coating weight is in a range of 0.0005 to 0.1 $g/m^2$ as solids. The substrate coated with the primer silicone composition is then exposed to UV radiation. When the solvent is used, the solvent may be evaporated off by air drying or heating. Drying and UV irradiation may be done simultaneously or separately and in any order as long as the benefits of the invention are obtainable.

For UV irradiation, any commercially available lamps or bulbs such as mercury lamps, metal halide lamps and fusion lamps may be used. Since the film substrate has a high absorption coefficient at 300 nm or shorter, those lamps or bulbs having a wavelength distribution containing more fractions of 300 nm or shorter wavelength are effective. An integral dose is 10 to 500 $mJ/cm^2$, which is obtained by irradiation, for example, from one or two 120-W lamps at a line speed of 10 to 100 m/min. Drying is typically effected at 20 to 120°C for 5 to 60 seconds.

After the primer silicone composition is coated on a paper or film substrate and exposed to UV radiation, there is obtained a treated paper or film substrate. On the primed or treated surface of the substrate, a release silicone composition is coated and cured, yielding a release paper or film.

Release silicone composition

The overlying release silicone composition used herein may be of addition or condensation type, and any commercially available compositions may be used. The form of the composition is not particularly limited and it may take solvent, solventless or emulsion form. A silicone composition of addition cure type comprising (C) an alkenyl-containing organopolysiloxane, (D) an organohydrogenpolysiloxane, (E) an addition reaction catalyst, and optionally (F) an organic solvent is typical although the composition is not limited thereto.

Component C

Component (C) is an organopolysiloxane containing at least two alkenyl groups in a molecule. Specifically, the organopolysiloxane is of a structure having the general formula (8).

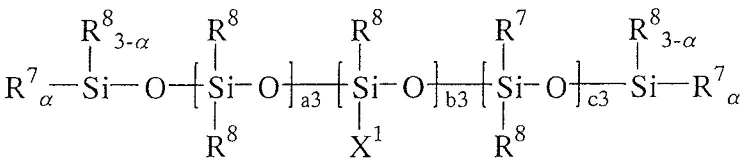 (8)

Herein $R^7$ is alkenyl, $R^8$ is a monovalent organic group free of aliphatic unsaturation or a hydroxyl group, $X^1$ is a group of formula (9):

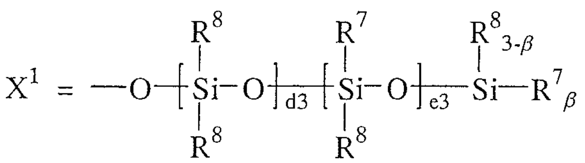 (9)

,

a3, b3, c3, d3, and e3 are such positive numbers that the organopolysiloxane may have a viscosity of at least 0.04 Pa-s at 25°C and a viscosity in 30 wt% toluene solution of up to 70 Pa-s at 25°C, as measured by a rotational viscometer, b3, c3, d3, and e3 may be 0, $\alpha$ and $\beta$ each are 0 or an integer of 1 to 3.

Specifically, $R^7$ is an alkenyl group, preferably of 2 to 6 carbon atoms, such as vinyl, allyl or butenyl. $R^8$ is selected from monovalent organic groups, typically monovalent hydrocarbon groups, preferably of 1 to 20 carbon atoms, more preferably of 1 to 8 carbon atoms, for example, $C_1$-$C_{12}$ alkyl groups such as methyl, ethyl, propyl and butyl, $C_4$-$C_{20}$ cycloalkyl groups such as cyclohexyl, $C_6$-$C_{20}$ aryl groups such as phenyl and tolyl, and substituted forms of the foregoing

in which some or all hydrogen atoms are replaced by halogen, cyano or the like, such as chloromethyl, trifluoropropyl, and cyanoethyl, as well as monovalent hydrocarbon groups containing $C_1$-$C_{12}$ alkoxy groups (e.g., methoxy, ethoxy, propoxy and methoxyethoxy), hydroxyl, or $C_2$-$C_{20}$ epoxy groups, such as glycidyl, glycidyloxy, or epoxycyclohexyl-substituted alkyl groups. $R^8$ is free of aliphatic unsaturation. From the industrial standpoint, $R^7$ is preferably vinyl. It is preferred for preparation and properties that methyl account for at least 80 mol% of $R^8$ in the overall organopolysiloxane as component (C).

While the organopolysiloxane as component (C) should contain at least two alkenyl groups per molecule, the content of alkenyl is desirably 0.001 to 0.3 mole per 100 g of the organopolysiloxane. In formula (8) and substituent group $X^1$, a3, b3, c3, d3, and e3 are selected such that the number of alkenyl groups per molecule: $c3+b3x(e3+\beta)+2\alpha$ may fall in the range of 2 to 2,500.

Although the main skeleton structure of the organopolysiloxane (C) is linear, an organopolysiloxane containing a branched chain structure as shown by the formula wherein b3 is not equal to 0 may also be employed.

Component D

Component (D) is an organohydrogenpolysiloxane containing at least three silicon-bonded hydrogen atoms (i.e., SiH groups) in a molecule. Preferably it has the average compositional formula (10):

$$R^8_fH_gSiO_{(4-f-g)/2} \qquad (10)$$

wherein $R^8$ is as defined above, f is 0 to 3, g is 0 to 3, and f+g is a positive number of 1 to 3.

The molecular structure may be linear, branched or cyclic. The organohydrogenpolysiloxane has an absolute viscosity which may range from several mPa-s to several ten thousand mPa-s at 25°C as measured by a rotational viscometer. Illustrative examples of the organohydrogenpolysiloxane are given below.

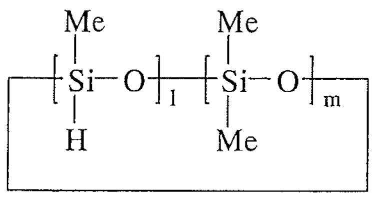

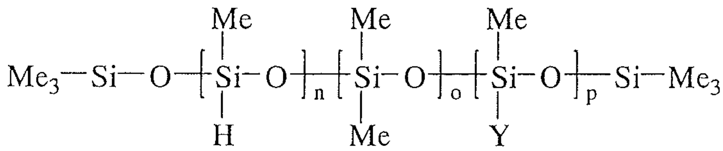

Y =

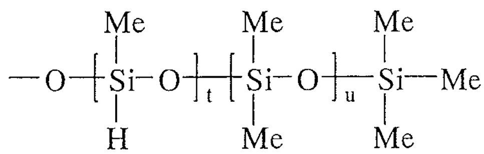

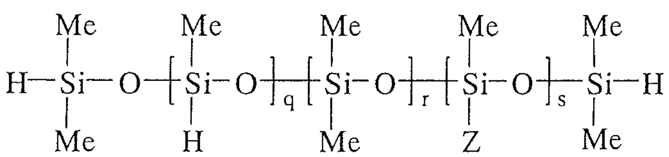

Z =

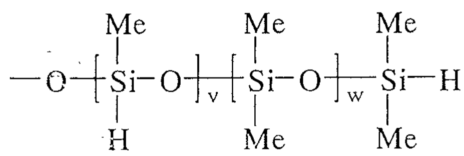

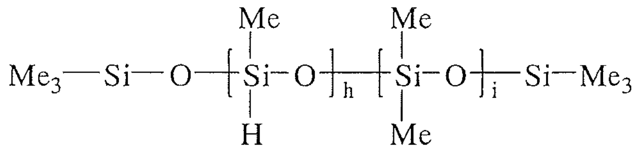

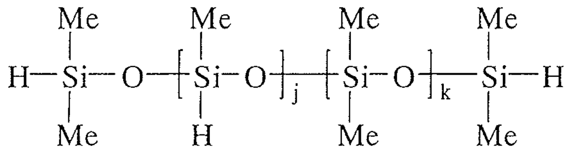

Herein, Me stands for methyl, h, 1 and n each are a number of 3 to 500, m, p and s each are a number of 1 to 500, i, j, k, o, q, r, t, u, v and w each are a number of 0 to 500.

The organohydrogenpolysiloxane as component (D) is blended in such amounts that the moles of SiH group is 1 to 10 times, preferably 1 to 5 times the total moles of alkenyl group in component (C). Generally speaking, an appropriate amount of component (D) blended is 0.1 to 10 parts by weight per 100 parts by weight of component (C).

<u>Component E</u>

Component (E) is a platinum group metal based catalyst which may be selected from prior art well-known catalysts for addition reaction. Exemplary catalysts include platinum black, chloroplatinic acid, chloroplatinic acid-olefin complexes, chloroplatinic acid-alcohol coordination compounds, rhodium, and rhodium-olefin complexes. The catalyst may be added in a catalytic amount, preferably in such an amount as to provide 5 to 1,000 ppm of platinum or rhodium based on the total weight of components (C) and (D), whereby a coating can be fully cured. The amount of the catalyst may be adjusted in accordance with the reactivity of the components or the desired cure rate.

<u>Component F</u>

Component (F) is an organic solvent which is added to the release silicone composition for the purposes of improving the stability of processing bath and applicability to various substrates and adjusting the coating weight and viscosity of the composition. The solvent may be the same as component (B) in the primer silicone composition. Suitable organic solvents include toluene, xylene, ethyl acetate, acetone, methyl ethyl ketone, and hexane. Any other organic solvents may be used as long as the components can be uniformly dissolved therein. When blended, the organic solvent is used in an amount of 100 to 9,900 parts by weight per 100 parts by weight of component (C). Note that component (F) is optional. Absent component (F), the viscosity of other components is changed to adjust an overall viscosity such that the resulting composition may be effectively coated by an applicator. The stability of processing bath may be adjusted by adding a bath life extender or the like, if necessary.

The release silicone composition may be prepared simply by mixing components (C), (D), (E), and (F) until uniform. To gain an appropriate pot life, component (E) should be added and mixed immediately before coating. When component (F) or organic solvent is used, one advantageous procedure is by dissolving components (C) and (D) in component (F) uniformly prior to mixing component (E) therewith.

If desired, additives including a pigment, leveling agent, and bath life extender may be added to the release silicone composition.

The release silicone composition is coated onto the treated paper or film substrate directly or after diluting with a suitable organic solvent, by any well-known coating techniques, for example, using a bar coater, roll coater, reverse coater, gravure coater, air knife coater, or if thin-film coating is desired, a high-precision offset coater or multi-stage roll coater.

The coating weight of the release silicone composition on the primed substrate varies with the intended application. The preferred coating weight is in a range of 0.05 to 5 $g/m^2$ as solids. The substrate coated with the release silicone composition is heated at 80 to 150°C for 5 to 60 seconds to form a cured coating on the primed substrate surface, obtaining a release paper or film.

As described above, some or all of the components of the release silicone composition may be added to the primer silicone composition for the purposes of improving the substrate wettability and applicability of the primer composition, and the primer layer's ability to receive the overlying release silicone composition. Namely one or more of components (C), (D) and (E) may be incorporated into the primer silicone composition. When these components are incorporated into the primer silicone composition, component (C) is preferably used in an amount of 1 to 100 parts by weight per 100 parts by weight of component (A). Component (D) is preferably used in an amount of 1 to 10 moles,

more preferably 1 to 5 moles per mole of alkenyl groups in components (A) and (C) combined. Too much component (D) is undesirable because the pot life may become short, detracting from working efficiency. Component (E) is preferably used in such an amount as to provide 1 to 1,000 ppm, more preferably 5 to 800 ppm of platinum or rhodium based on the total weight of components (A), (C), and (D). Too much component (E) is undesirable because the pot life may become short, detracting from working efficiency.

In the embodiment wherein one or more of components (C), (D) and (E) are incorporated into the primer silicone composition, the coating technique, coating weight and curing conditions may be the same as above. The primer coating may be heated at 100 to 120°C for 5 to 30 seconds, if necessary, for rendering the coating non-tacky.

## EXAMPLE

Examples of the invention are given below by way of illustration and not by way of limitation. All parts are by weight. Me stands for methyl, and Vi for vinyl. The viscosity is an absolute viscosity measured at 25°C by a rotational viscometer.

### Examples 1 to 17 and Comparative-Examples 1 to 8

A primer silicone composition was prepared by mixing the amounts indicated in Table 1 of components (A) and (B). The composition was coated onto a PET or OPP substrate in a coating weight of 0.005 g/m$^2$, exposed to UV radiation from two 80-W UV lamps at a line speed of 40 m/min in an integral dose of 50 mJ/cm$^2$, and heat treated in a hot air circulating dryer at 80°C for 10 seconds, yielding a primed substrate.

An overcoat composition or release silicone composition was prepared by mixing the amounts indicated in Table 1 of components (C), (D) and (F) and an amount of component (E) so as to provide 100 ppm of platinum based on the total weight of (C)+(D). The release silicone composition was coated onto the primed substrate in a coating weight of 0.5 g/m$^2$ and heat cured at 100°C for 30 seconds, yielding a release film which was evaluated according to the evaluation method described later.

### Comparative Example 9

A primer silicone composition was prepared by mixing the amounts indicated in Table 1 of components (A) and (B), coated onto a substrate, and heat treated in a hot air circulating dryer at 80°C for 30 seconds. UV irradiation was omitted. In this way, a primed substrate was obtained. Thereafter, a release film was manufactured and evaluated as above.

The components in Table 1 are identified below.

--Component A

(A1-1) siloxane, viscosity 5 mPa-s, Vi content 1.2 mol/100 g

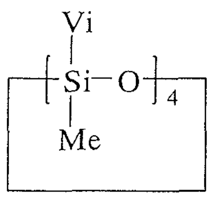

(A1-2) siloxane, viscosity 5 mPa-s, Vi content 0.63 mol/100 g

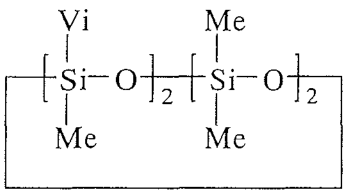

(A1-3) siloxane, viscosity 10 mPa-s, Vi content 0.6 mol/100 g

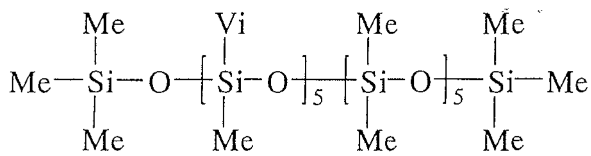

(A1-4) siloxane, viscosity 6 mPa-s, Vi content 0.7 mol/100 g

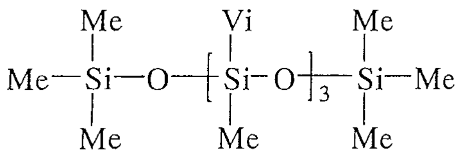

(A1-5) siloxane, viscosity 0.02 Pa-s, alkenyl content 0.33 mol/100 g

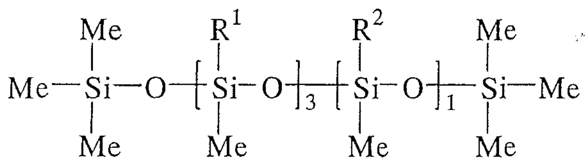

$R^1$ is $-CH_2CH_2CH_2-O-CO-(CH_3)C=CH_2$ (127).
$R^2$ is $-CH_2CH_2CH_2-O-CH_2CH_2-OH$ (106).

(A1-6) siloxane, viscosity 6 mPa-s, alkenyl content 0.49 mol/100 g

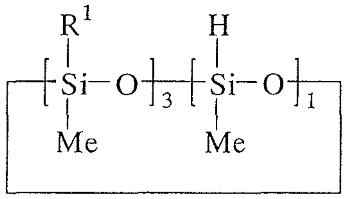

$R^1$ is $-CH_2CH_2CH_2-O-CO-(CH_3)C=CH_2$ (127).

(A1-7) siloxane, viscosity 5 mPa-s, Vi content 0.32 mol/100 g

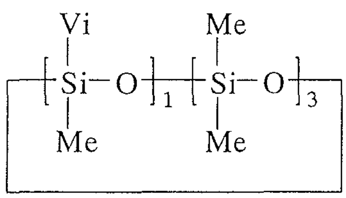

(A1-8) siloxane, viscosity 6 mPa-s, Vi content 0.32 mol/100 g

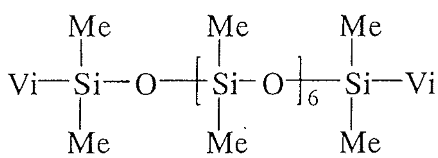

(A1-9) siloxane, viscosity 0.035 Pa-s, Vi content 0.32 mol/100 g

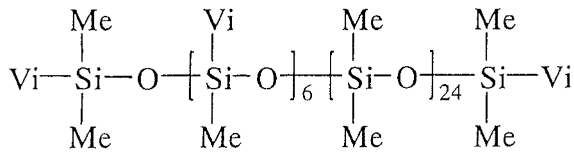

(A1-10) siloxane, viscosity 0.03 Pa-s, alkenyl content 0.75 mol/100 g

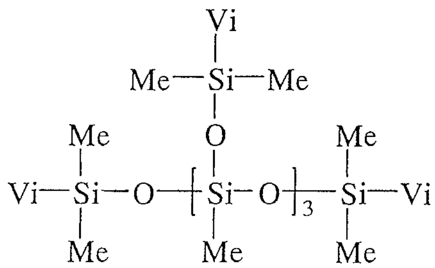

(A1-11) siloxane, viscosity 0.02 Pa-s, alkenyl content 0.93 mol/100 g

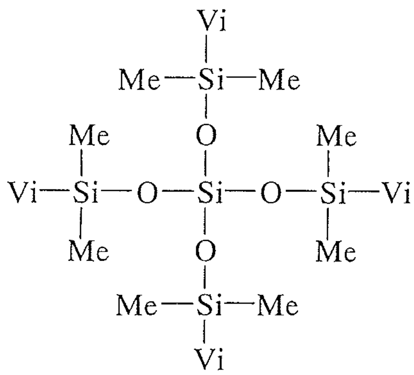

(A1-12) siloxane, viscosity 0.04 Pa-s, alkenyl content 0.88 mol/100 g

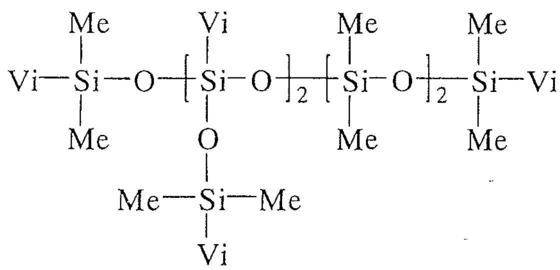

(A2-1) acetylene alcohol, 3-methyl-1-butyn-3-ol

(A2-2) acetylene alcohol, 3,5-dimethyl-1-hexyn-3-ol

(A2-3) acetylene alcohol, 1-ethynyl-1-cyclohexanol

(A2-4) acetylene compound, 1-octyne

--Component B

(B-1) solvent, 50/50 (weight ratio) toluene/heptane mixture

--Component C

(C-1) organopolysiloxane, viscosity at 25°C in 30 wt% toluene solution 10 Pa-s, Vi content 0.032 mol/100 g

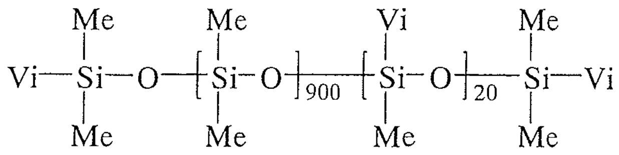

(C-2) organopolysiloxane, viscosity 2 Pa-s, Vi content 0.026 mol/100 g

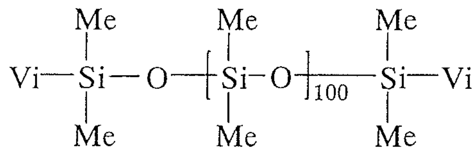

(C-3) organopolysiloxane, viscosity at 25°C in 30 wt% toluene solution 5 Pa-s, Vi content 0.035 mol/100 g

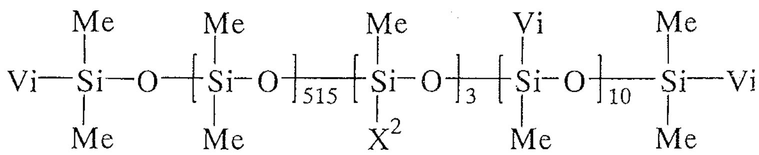

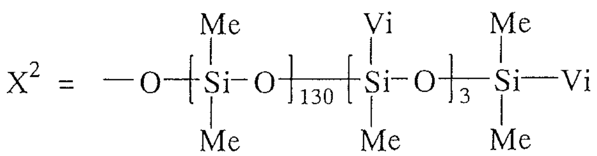

(C-4) organopolysiloxane, viscosity 1 Pa-s, Vi content 0.043 mol/100 g

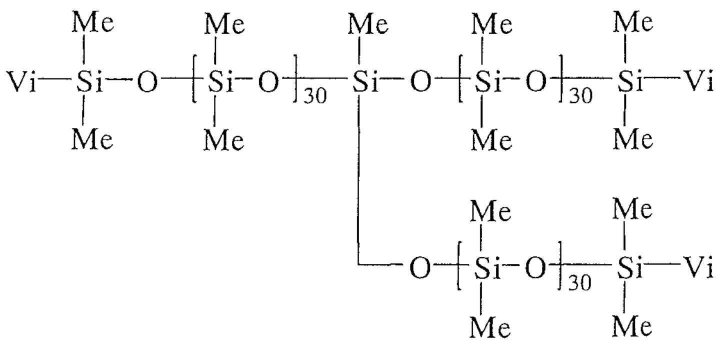

--Component D

(D-1) methylhydrogenpolysiloxane, viscosity 25 mPa-s, H content 1.5 mol/100 g

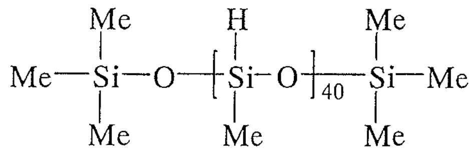

(D-2) methylhydrogenpolysiloxane, viscosity 60 mPa-s, H content 1.00 mol/100 g

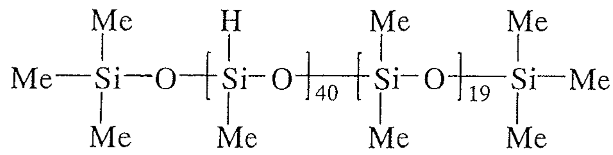

--Component E

(E-1) catalyst, platinum-vinylsiloxane complex

--Component F

The same as component B

Table 1

| No. | | Component (pbw) | | | | | | Peeling force (N) | Adhesion | |
|---|---|---|---|---|---|---|---|---|---|---|
| | | A1 | A2 | B | C | D | F | | PET | OPP |
| Example | 1 | A1-1 0.1 | | 99.9 | C-1 100 | D-1 2 | 90 | 0.4 | ◎ | ◎ |
| | 2 | A1-2 0.2 | | 99.8 | C-1 100 | D-1 2 | 2,090 | 0.6 | ○ | ○ |
| | 3 | A1-3 0.2 | | 99.8 | C-1 100 | D-1 2 | 2,090 | 0.5 | ○ | ○ |
| | 4 | A1-4 0.2 | | 99.8 | C-3 100 | D-2 4 | 2,147 | 0.65 | ○ | ○ |
| | 5 | A1-5 0.2 | | 99.8 | C-3 100 | D-2 4 | 2,128 | 0.7 | ○ | ○ |
| | 6 | A1-6 0.1 | | 99.9 | C-3 100 | D-2 4 | 2,071 | 0.55 | ◎ | ◎ |
| | 7 | | A2-1 0.05 | 99.95 | C-1 100 | D-1 2 | 1,995 | 0.35 | ○ | ○ |
| | 8 | | A2-2 0.025 | 99.975 | C-3 100 | D-1 4 | 1,986 | 0.5 | ○ | ○ |
| | 9 | A1-1 0.1 | | 99.9 | C-2 100 | D-1 4 | - | 0.5 | ◎ | ◎ |
| | 10 | A1-2 100 | | - | C-4 100 | D-2 10 | - | 0.7 | ○ | ○ |
| | 11 | A1-1 100 | | - | C-2 100 | D-1 4 | - | 0.5 | ○ | ○ |
| | 12 | A1-1 0.1 | A2-3 0.015 | 99.885 | C-4 100 | D-2 10 | - | 0.6 | ◎ | ◎ |
| | 13 | A1-1 0.1 | | 99.9 | C-1 100 | D-1 4 | 2,014 | 0.4 | ○ | ○ |
| | 14 | A1-1 0.1 | | 99.9 | C-1 100 | D-1 4 | 2,014 | 0.4 | ○ | ○ |
| | 15 | A1-10 0.1 | | - | C-4 100 | D-2 10 | - | 0.7 | ○ | ○ |
| | 16 | A1-11 0.1 | | - | C-4 100 | D-2 10 | - | 0.7 | ○ | ○ |
| | 17 | A1-12 0.1 | | - | C-4 100 | D-2 10 | - | 0.7 | ○ | ○ |
| Comparative Example | 1 | A1-1 0.0025 | | 99.998 | C-1 100 | D-1 4 | 1,977 | 0.4 | △ | △ |
| | 2 | A1-7 0.2 | | 99.8 | C-1 100 | D-1 4 | 2,052 | 0.35 | × | × |
| | 3 | A1-8 0.2 | | 99.8 | C-3 100 | D-2 8 | 2,128 | 0.5 | × | × |
| | 4 | A1-9 0.2 | | 99.8 | C-3 100 | D-2 8 | 2,128 | 0.5 | × | △ |
| | 5 | | A2-4 0.025 | 99.975 | C-1 100 | D-1 4 | 1,986 | 0.35 | × | × |
| | 6 | A1-7 0.2 | | 99.8 | C-2 100 | D-1 4 | - | 0.5 | × | × |
| | 7 | A1-8 0.2 | | 99.8 | C-4 100 | D-2 8 | - | 0.6 | × | × |
| | 8 | | A2-4 0.025 | 99.875 | C-4 100 | D-1 6 | - | 0.6 | × | × |
| | 9* | A1-1 0.1 | | 99.9 | C-1 100 | D-1 4 | 2,014 | 0.4 | × | × |

* no UV irradiation

Evaluation method

Evaluation of test items and rating of results are as follows.

(1) Peeling force

Solvent-type primer compositions were coated onto a PET film of 40 μm thick in a coating weight of 0.005 g/$m^2$ as solids by means of a bar coater, exposed to UV radiation from two 80-W UV lamps at a line speed of 40 m/min in an integral dose of 50 mJ/$cm^2$, and heat treated in a hot air circulating dryer at 80°C for 10 seconds, yielding a primed film. A solvent type release silicone composition consisting of components (C) to (F) was coated onto the primed film in a coating weight of 0.5 g/$m^2$ as solids and heat treated in a hot air circulating dryer at 100°C for 30 seconds until a cured coating was formed, obtaining a test separator.

The separator was allowed to stand at 25°C and 50% RH for one day, after which a solvent type acrylic pressure-sensitive adhesive (Oribain BPS-5127, Toyo Ink Mfg. Co., Ltd.) was coated onto the cured coating surface and heat treated at 100°C for 3 minutes. Next, a PET film of 40 μm was laid on the treated surface, pressed by rolling once back and forth a roller of 2 kg, and aged at 25°C for 20 hours. The sample was cut into a strip of 5 cm wide. Using a tensile tester, the force (N) required to peel the overlying PET film from the separator at an angle of 180° and a pull rate of 0.3 m/min was measured as adhesive strength. The tester used was autograph DCS-500 (Shimadzu Mfg. Co., Ltd.).

Solventless primer compositions were coated onto a PET film of 40 μm thick in a coating weight of 0.005 g/$m^2$ as solids by means of an IR tester. The coating was UV irradiated under two 80-W UV lamps at a line speed of 40 m/min to an integral dose of 50 mJ/$cm^2$ and heat treated in a hot air circulating dryer at 80°C for 10 seconds, yielding a primed film. A solventless release silicone composition consisting of components (C) to (E) was coated onto the primed film to a coating weight of 0.5 g/$m^2$ as solids by means of an IR tester and heat treated in a hot air circulating dryer at 120°C for 30 seconds until a cured coating was formed. The subsequent process was the same as above, obtaining a test separator which was similarly evaluated. It is noted that the coating area was A4 size, and the transfer amount of primer liquid was 0.001 μL and the transfer amount of overcoating liquid was 0.1 μL.

(2) Adhesion

A PET film (40 μm) substrate separator prepared as in (1) and another separator prepared as in (1) using a corona-treated OPP film (40 μm) as the substrate were aged under predetermined conditions. After a certain aging period (days), the separator was examined whether the coating surface became hazy and rubbed off when the surface of the cured coating was rubbed with the finger.

The sample which showed haze or rub-off after aging at 40°C and 80% RH for one day was rated poor (X). The sample which showed haze or rub-off after aging at 40°C and 80% RH for 3 days was rated fair (Δ). The sample which did not show haze or rub-off even after aging at 40°C and 80% RH for one month was rated good (○). The sample which did not show haze or rub-off even after aging at 60°C and 90% RH for one month was rated excellent (◎).

Note

In respect of numerical ranges disclosed in the present description it will of course be understood that in the normal way the technical criterion for the upper limit is different from the technical criterion for the lower limit, i.e. the upper and lower limits are intrinsically distinct proposals.

## Claims

**1.** A silicone primer composition which is, on use, coated on a paper or plastic film substrate and exposed to UV to form a primer layer to be overlaid with a cured coating of a release silicone composition to form a release paper or film, the silicone primer composition consisting of

(A) an adhesion providing component which is

(A1) organopolysiloxane containing per molecule at least two silicon-bonded alkenyl-containing substituent groups, having an alkenyl content of from 0.3 to 2.0 mol/100 g, and having a structure in which two siloxane units having alkenyl-containing substituent group bonded to silicon atom are linked directly, or via not more than 3 intervening siloxane units not having alkenyl-containing substituent group bonded to silicon atom, the organopolysiloxane having a viscosity of less than 0.04 Pa-s at 25°C, and/or

(A2) compound containing per molecule at least one substituent group of 2 to 10 carbon atoms having a carbon-carbon unsaturated bond (double or triple bond)as functionality and at least one substituent group having a group capable of addition reaction and/or condensation reaction with an alkenyl and/or SiH group;

(B) optionally, an organic solvent.

**2.** A primer composition of claim 1 wherein component (A1) is organopolysiloxane represented by the compositional formula (1) having a structure of the general formula (2), and having an average polymerization of 2 to 50,

$$[M]_{m1}[M^A]_{m2}[D]_{d1}[D^A]_{d2}[T]_{t1}[T^A]_{t2}[Q]_{q1} \quad (1)$$

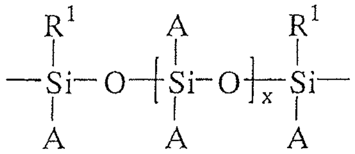

(2)

wherein $R^1$ is an alkenyl-containing substituent group of 2 to 10 carbon atoms, A is $R^2$ or a siloxane residue bonded via an oxygen atom and selected so that the molecule satisfies formula (1), provided that two A groups connected to one silicon atom may together form a cyclic structure $-O(SiR^2{}_2O)_y-$, $R^2$ is substituted or unsubstituted monovalent hydrocarbon group of 1 to 10 carbon atoms, x is an integer of 0 to 3, y is an integer selected such that that the organopolysiloxane of formula (1) has an average degree of polymerization of 2 to 50,
M, $M^A$, D, $D^A$, T, $T^A$, and Q are siloxane units as defined below, $O_{1/2}$ denoting that adjacent siloxane units are linked via an oxygen atom,
M and $M^4$ each are:

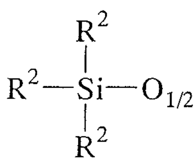

,

$M^A$ being such a unit in which at least one $R^2$ is $R^1$,
D and $D^A$ each are:

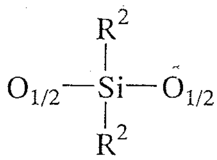

,

$D^A$ being such a unit in which at least one $R^2$ is $R^1$,
T and $T^A$ each are:

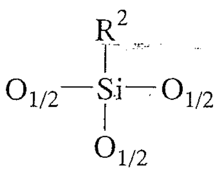

,

$T^A$ being such a unit in which $R^2$ is $R^1$
Q is:

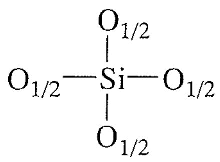 ,

m1, m2, d1, d2, t1, t2 and q1 are numbers satisfying the relations:

$$t1+t2+2\times q1 \leq m1+m2 \leq 2+t1+t2+2\times q1$$

$$0 \leq d1+d2 \leq 48,\ 0 \leq t1+t2 \leq 30,\ 0 \leq q1 \leq 20,$$

$$0.25 \leq (m2+d2+t2)/(m1+m2+d1+d2+t1+t2+q1) \leq 1.$$

**3.** A primer composition of claim 2 wherein x in formula (2) is 0 or 1.

**4.** A primer composition of claim 2 or 3 wherein component (A1) is a compound of linear or branched siloxane structure having the general formula (3) or (4):

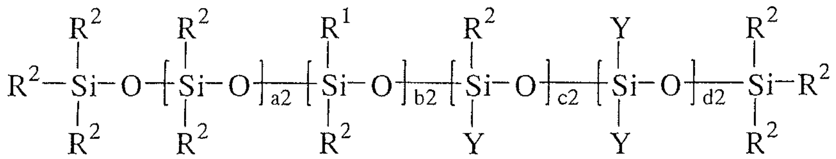 (3)

wherein $R^1$ and $R^2$ are as defined above, Y is a group of the following formula (3a):

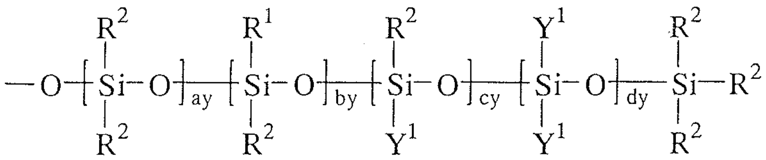 (3a)

wherein $R^1$ and $R^2$ are as defined above, $Y^1$ is a group of the following formula (3b):

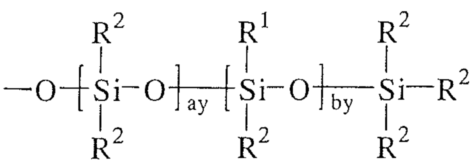 (3b)

wherein $R^1$ and $R^2$ are as defined above,
a2, b2, ay, and by each are an integer of 0 to 48, c2 and cy each are an integer of 0 to 30, d2 and dy each are an integer of 0 to 20,

formulae (3), (3a) and (3b) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom,

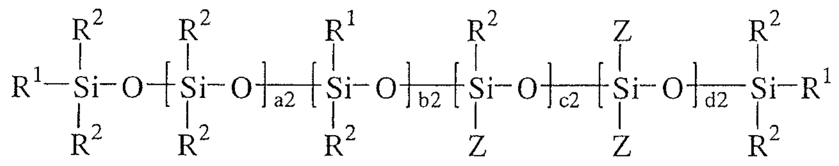 (4)

wherein $R^1$ and $R^2$ are as defined above, Z is a group of the following formula (4a):

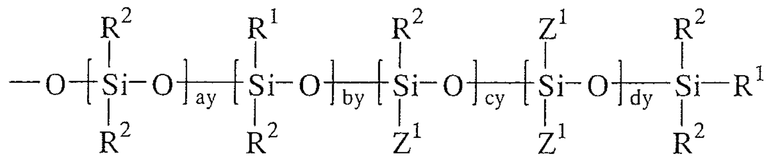 (4a)

wherein $R^1$ and $R^2$ are as defined above, $Z^1$ is a group of the following formula (4b):

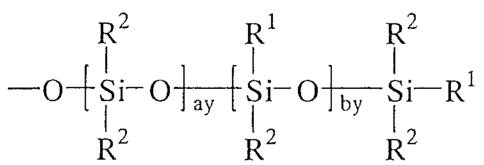 (4b)

wherein $R^1$ and $R^2$ are as defined above,
a2, b2, ay, and by each are an integer of 0 to 48, c2 and cy each are an integer of 0 to 30, d2 and dy each are an integer of 0 to 20,

formulae (4), (4a) and (4b) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

**5.** A primer composition of claim 2 or 3 wherein component (A1) is a compound of cyclic siloxane structure having the general formula (5):

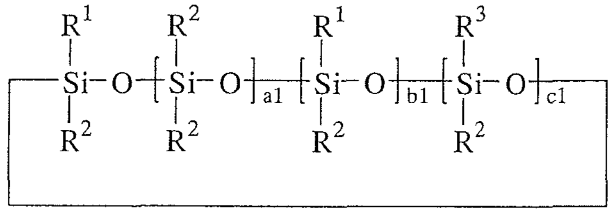 (5)

wherein $R^1$ and $R^2$ are as defined above, $R^3$ is a substituent group having an OH or SiH group as functionality or a substituted or unsubstituted monovalent hydrocarbon group of 1 to 10 carbon atoms free of aliphatic unsaturation, a1 is 0 or 1, b1 is an integer of 1 to 6, c1 is an integer of 0 to 5, and a1+b1+c1 is an integer of at least 2.

**6.** A primer composition of any one of claims 1 to 5 wherein in component (A2),

the substituent group having a carbon-carbon unsaturated bond (double or triple bond) is a substituent group having alkenyl, alkynyl, acryloyloxy or methacryloyloxy, and
the substituent group having a group capable of addition reaction and/or condensation reaction with an alkenyl and/or SiH group is a substituent group having a SiH, OH or alkenyl group as functionality.

**7.** A primer composition of any one of claims 1 to 5 wherein in component (A2), the substituent group having a carbon-carbon unsaturated bond (double or triple bond) is a substituent group of 2 to 10 carbon atoms having alkynyl, acryloyloxy or methacryloloxy, and the substituent group having a group capable of addition reaction and/or condensation reaction with an alkenyl and/or SiH group is a substituent group having a SiH, OH or alkenyl group as functionality.

**8.** A primer composition of any one of claims 1 to 5 wherein component (A2) is a compound containing a divalent structural unit having the general formula (6-1), a compound containing divalent structural units having the general formulae (6-2) and (6-3), a compound of cyclic structure having the general formula (7-1), or a compound of cyclic structure having the general formula (7-2):

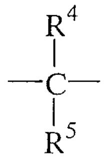
(6-1)

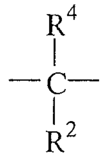
(6-2)

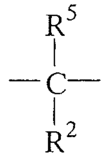
(6-3)

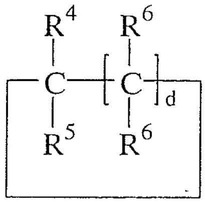
(7-1)

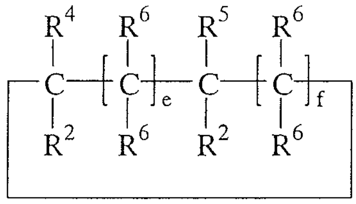
(7-2)

wherein $R^2$ is a substituted or unsubstituted monovalent hydrocarbon group of 1 to 10 carbon atoms, $R^4$ is a substituent group of 2 to 10 carbon atoms containing alkynyl, acryloyloxy or methacryloyloxy, $R^5$ is a substituent group having an OH, SiH or alkenyl group as functionality, $R^6$ is hydrogen, a saturated hydrocarbon group of 1 to 10 carbon atoms or aromatic group, the same group as $R^4$, or the same group as $R^5$, d is 4 to 10, and e+f is 3 to 9.

**9.** A primer composition of any one of claims 1 to 8 wherein the release silicone composition is of addition and condensation reaction cure type.

**10.** A primer composition of any one of claims 1 to 9, further comprising some or all of components of the release silicone composition.

**11.** A treated paper or film substrate obtained by coating a surface of a paper or film substrate with a primer composition of any one of claims 1 to 10 and exposing to UV radiation, wherein the treated surface will be overlaid with a cured coating of a release silicone composition to form a release paper or film,

**12.** A release paper or film comprising a treated paper or film substrate of claim 11 and a release silicone composition coated and cured to the treated substrate surface.

**13.** A method of making a treated paper or film substrate, suitable for use in making a release paper or film by subsequent coating with a release silicone composition, the method comprising coating a surface of a paper or film substrate with a primer composition of any one of claims 1 to 10 and exposing to UV radiation.

**14.** A method of making a release paper or film, comprising

(a) coating a silicone release composition onto a treated paper or film substrate of claim 11, and curing the silicone release composition, or
(b) coating a surface of a paper or film substrate with a primer composition of any one of claims 1 to 10, exposing it to UV radiation, and then coating a silicone release composition onto the primed substrate and curing the silicone release composition.

**Patentansprüche**

1. Silikonprimerzusammensetzung, die bei Verwendung auf ein Papier- oder Kunststofffilmsubstrat beschichtet und UV ausgesetzt wird, um eine Primerschicht zu bilden, die mit einer gehärteten Beschichtung einer Trennsilikonzusammensetzung bedeckt wird, um ein(en) Trennpapier oder -film zu bilden, wobei die Silikonprimerzusammensetzung aus Folgendem besteht:

    (A) eine für Adhäsion sorgende Komponente, die Folgendes ist:

        (A1) Organopolysiloxan, das pro Molekül zumindest zwei siliciumgebundene, Alkenyl enthaltende Substituentengruppen enthält, mit einem Alkenylgehalt von 0,3 bis 2,0 mol/100 g und mit einer Struktur, in der zwei Siloxaneinheiten, die eine an ein Siliciumatom gebundene, Alkenyl enthaltende Substituentengruppe aufweisen, direkt oder über nicht mehr als 3 dazwischen liegende Siloxaneinheiten ohne an ein Siliciumatom gebundene, Alkenyl enthaltende Substituentengruppe miteinander verbunden sind, wobei das Organopolysiloxan eine Viskosität bei 25 °C von weniger als 0,04 Pa.s aufweist, und/oder
        (A2) eine Verbindung, die pro Molekül zumindest eine Substituentengruppe mit 2 bis 10 Kohlenstoffatomen und einer ungesättigten Kohlenstoff-Kohlenstoff-Bindung (Doppel- oder Dreifachbindung) als Funktionalität und zumindest eine Substituentengruppe, die eine Gruppe aufweist, die zu einer Additionsreaktion und/oder Kondensationsreaktion mit einer Alkenyl- und/oder SiH-Gruppe in der Lage ist, enthält;

    (B) gegebenenfalls ein organisches Lösungsmittel.

2. Primerzusammensetzung nach Anspruch 1, worin die Komponente (A1) ein durch die Zusammensetzungsformel (1) dargestelltes Organopolysiloxan ist, das eine Struktur der allgemeinen Formel (2) und einen durchschnittlichen Polymerisationsgrad von 2 bis 50 aufweist,

$$[M]_{m1}[M^A]_{m2}[D]_{d1}[D^A]_{d2}[T]_{t1}[T^A]_{t2}[Q]_{q1} \qquad (1)$$

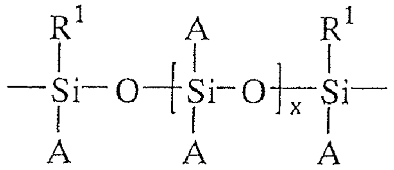
(2)

worin $R^1$ eine Alkenyl enthaltende Substituentengruppe mit 2 bis 10 Kohlenstoffatomen ist; A $R^2$ oder ein Siloxanrest ist, der über ein Sauerstoffatom gebunden und so ausgewählt ist, dass das Molekül die Formel (1) erfüllt, mit der Maßgabe, dass zwei an ein Siliciumatom gebundene Gruppen A gegebenenfalls zusammen eine zyklische Struktur $-O(SiR^2{}_2O)_y-$ bilden; $R^2$ eine substituierte oder unsubstituierte einwertige Kohlenwasserstoffgruppe mit 1 bis 10 Kohlenstoffatomen ist; x für eine ganze Zahl von 0 bis 3 steht; y für eine ganze Zahl steht, die so ausgewählt ist, dass das Organopolysiloxan der Formel (1) einen durchschnittlichen Polymerisationsgrad von 2 bis 50 aufweist;
M, $M^A$, D, $D^A$, T, $T^A$ und Q Siloxaneinheiten wie unten definiert sind, wobei $O_{1/2}$ angibt, dass benachbarte Siloxaneinheiten über ein Sauerstoffatom verbunden sind, wobei M und $M^A$ jeweils

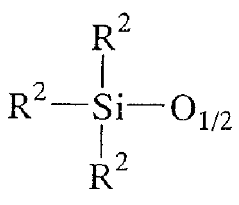

sind,
wobei $M^A$ eine Einheit ist, in der zumindest ein $R^2$ $R^1$ ist, wobei D und $D^A$ jeweils

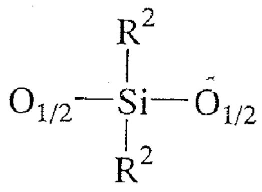

sind,
wobei $D^A$ eine Einheit ist, in der zumindest ein $R^2$ $R^1$ ist; wobei T und $T^A$ jeweils

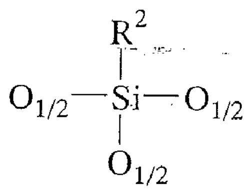

sind,
wobei $T^A$ eine Einheit ist, in der $R^2$ $R^1$ ist; wobei Q

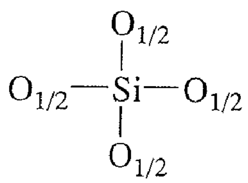

ist,
wobei m1, m2, d1, d2, t1, t2 und q1 Zahlen sind, die die folgenden Beziehungen erfüllen:

$$t1+t2+2xq1 \leq m1+m2 \leq 2+t1+t2+2xq1$$

$$0 \leq d1+d2 \leq 48, \quad 0 \leq t1+t2 \leq 30, \quad 0 \leq q1 \leq 20,$$

$$0{,}25 \leq (m2+d2+t2) / (m1+m2+d1+d2+t1+t2+q1) \leq 1$$

**3.** Primerzusammensetzung nach Anspruch 2, worin x in Formel (2) 0 oder 1 ist.

**4.** Primerzusammensetzung nach Anspruch 2 oder 3, worin die Komponente (A1) eine Verbindung mit einer linearen oder verzweigten Siloxanstruktur der allgemeinen Formel (3) oder (4) ist:

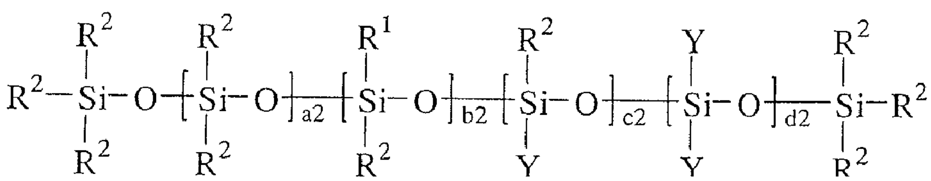 (3)

worin $R^1$ und $R^2$ wie oben definiert sind, Y eine Gruppe der folgenden Formel (3a) ist:

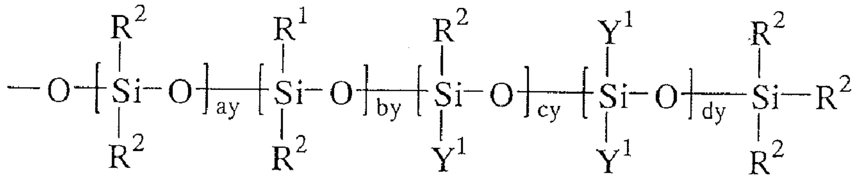

(3a)

worin $R^1$ und $R^2$ wie oben definiert sind, $Y^1$ eine Gruppe der folgenden Formel (3b) ist:

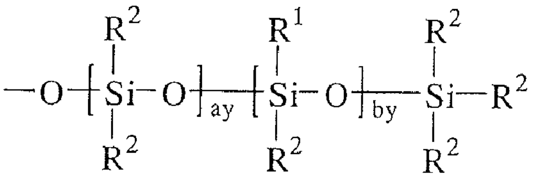

(3b)

worin $R^1$ und $R^2$ wie oben definiert sind,
a2, b2, ay und by jeweils eine ganze Zahl von 0 bis 48 sind, c2 und cy jeweils eine ganze Zahl von 0 bis 30 sind, d2 und dy jeweils eine ganze Zahl von 0 bis 20 sind,

die Formeln (3), (3a) und (3b) jeweils eine zufällige Struktur bezeichnen und zumindest eine Struktur mit zwei Siloxaneinheiten umfassen, in denen die Alkenyl enthaltende Substituentengruppe $R^1$ an ein Siliciumatom gebunden ist und die direkt oder über bis zu 3 dazwischen liegende Siloxaneinheiten, in denen $R^1$ nicht an ein Siliciumatom gebunden ist, verbunden sind,

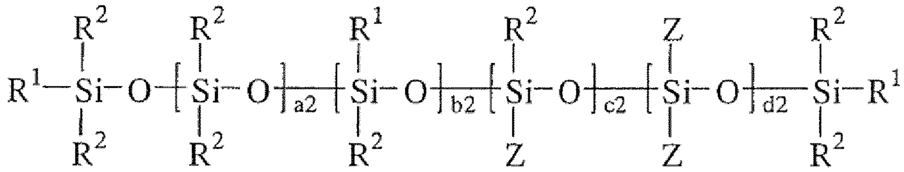

(4)

worin $R^1$ und $R^2$ wie oben definiert sind, Z eine Gruppe der folgenden Formel (4a) ist:

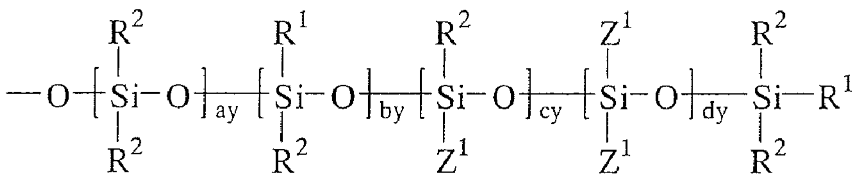

(4a)

worin $R^1$ und $R^2$ wie oben definiert sind, $Z^1$ eine Gruppe der folgenden Formel (4b) ist:

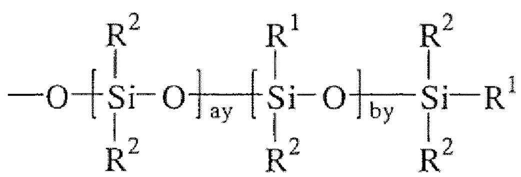

(4b)

worin $R^1$ und $R^2$ wie oben definiert sind,
a2, b2, ay und by jeweils eine ganze Zahl von 0 bis 48 sind, c2 und cy jeweils eine ganze Zahl von 0 bis 30 sind, d2 und dy jeweils eine ganze Zahl von 0 bis 20 sind,
die Formeln (4), (4a) und (4b) jeweils eine zufällige Struktur bezeichnen und zumindest eine Struktur mit zwei Siloxaneinheiten umfassen, in denen die Alkenyl enthaltende Substituentengruppe $R^1$ an ein Siliciumatom gebunden ist und die direkt oder über bis zu 3 dazwischen liegende Siloxaneinheiten, in denen $R^1$ nicht an ein Siliciumatom gebunden ist, verbunden sind.

**5.** Primerzusammensetzung nach Anspruch 2 oder 3, worin die Komponente (A1) eine Verbindung mit zyklischer Siloxanstruktur der allgemeinen Formel (5) ist:

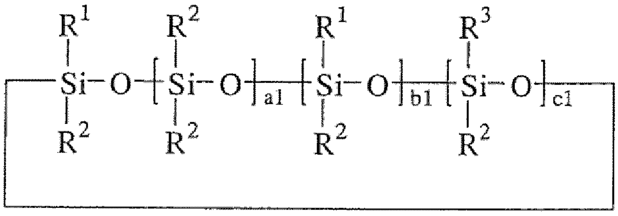

(5)

worin $R^1$ und $R^2$ wie oben definiert sind, $R^3$ eine Substituentengruppe mit einer OH- oder SiH-Gruppe als Funktionalität oder eine substituierte oder unsubstituierte einwertige Kohlenwasserstoffgruppe mit 1 bis 10 Kohlenstoffatomen ohne aliphatische Unsättigung ist, a1 = 0 oder 1 ist, b1 eine ganze Zahl von 1 bis 6 ist, c1 eine ganze Zahl von 0 bis 5 ist, und a1 +b1 +c1 eine ganze Zahl von zumindest 2 ergibt.

**6.** Primerzusammensetzung nach einem der Ansprüche 1 bis 5, worin in Komponente (A2)
die Substituentengruppe mit einer ungesättigten Kohlenstoff-Kohlenstoff-Bindung (Doppel- oder Dreifachbindung) eine Substituentengruppe mit Alkenyl, Alkinyl, Acryloyloxy oder Methacryloyloxy ist und
die Substituentengruppe mit einer Gruppe, die zu einer Additionsreaktion und/ oder einer Kondensationsreaktion mit einer Alkenyl- und/oder SiH-Gruppe in der Lage ist, eine Substituentengruppe mit einer SiH-, OH- oder Alkenylgruppe als Funktionalität ist.

**7.** Primerzusammensetzung nach einem der Ansprüche 1 bis 5, worin in Komponente (A2) die Substituentengruppe mit einer ungesättigten Kohlenstoff-Kohlenstoff-Bindung (Doppel- oder Dreifachbindung) eine Substituentengruppe mit 2 bis 10 Kohlenstoffatomen mit Alkinyl, Acryloyloxy oder Methacryloyloxy ist und die Substituentengruppe mit einer Gruppe, die zu einer Additionsreaktion und/oder einer Kondensationsreaktion mit einer Alkenyl- und/oder SiH-Gruppe in der Lage ist, eine Substituentengruppe mit einer SiH-, OH- oder Alkenylgruppe als Funktionalität ist.

**8.** Primerzusammensetzung nach einem der Ansprüche 1 bis 5, worin die Komponente (A2) eine Verbindung, die eine zweiwertige Struktureinheit der allgemeinen Formel (6-1) enthält, eine Verbindung, die zweiwertige Struktureinheiten der allgemeinen Formeln (6-2) und (6-3) enthält, eine Verbindung zyklischer Struktur der allgemeinen Formel (7-1) oder eine Verbindung zyklischer Struktur der allgemeinen Formel (7-2) ist:

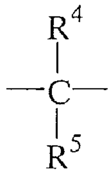

(6-1)

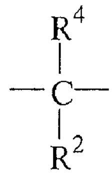

(6-2)

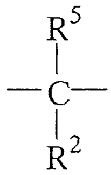

(6-3)

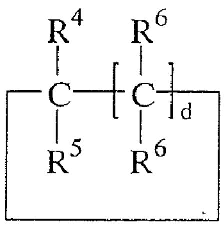

(7-1)

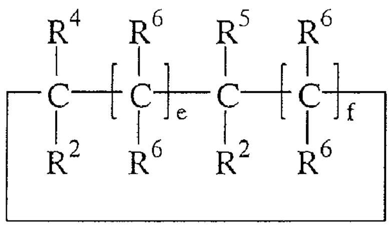

(7-2)

worin $R^2$ eine substituierte oder unsubstituierte einwertige Kohlenwasserstoffgruppe mit 1 bis 10 Kohlenstoffatomen ist, $R^4$ eine Substituentengruppe mit 2 bis 10 Kohlenstoffatomen ist, die Alkinyl, Acryloyloxy oder Methacryloyloxy enthält, $R^5$ eine Substituentengruppe mit einer OH-, SiH- oder Alkenylgruppe als Funktionalität ist, $R^6$ Wasserstoff,

eine gesättigte Kohlenwasserstoffgruppe mit 1 bis 10 Kohlenstoffatomen oder eine aromatische Gruppe, dieselbe Gruppe wie $R^4$ oder dieselbe Gruppe wie $R^5$ ist, d = 4 bis 10 ist und e+f = 3 bis 9 ist.

**9.** Primerzusammensetzung nach einem der Ansprüche 1 bis 8, worin die Trennsilikonzusammensetzung vom Additions- und Kondensationsreaktionshärtungstyp ist.

**10.** Primerzusammensetzung nach einem der Ansprüche 1 bis 9, die weiters manche oder alle der Komponenten der Trennsilikonzusammensetzung umfasst.

**11.** Behandeltes Papier- oder Filmsubstrat, erhalten durch Beschichten einer Oberfläche eines Papier- oder Filmsubstrats mit einer Primerzusammensetzung nach einem der Ansprüche 1 bis 10 und Aussetzen gegenüber UV-Strahlung, wobei die behandelte Oberfläche mit einer gehärteten Beschichtung einer Trennsilikonzusammensetzung bedeckt wird, um ein(en) Trennpapier oder -film zu bilden.

**12.** Trennpapier oder -film, umfassend ein behandeltes Papier- oder Filmsubstrat nach Anspruch 11 und eine Trennsilikonzusammensetzung, mit der die behandelte Substratoberfläche beschichtet wurde und die gehärtet wurde.

**13.** Verfahren zur Herstellung eines behandelten Papier- oder Filmsubstrats, das zur Verwendung bei der Herstellung eines Trennpapiers oder -films geeignet ist, durch spätere Beschichtung mit einer Trennsilikonzusammensetzung, wobei das Verfahren die Beschichtung einer Oberfläche eines Papier- oder Filmsubstrats mit einer Primerzusammensetzung nach einem der Ansprüche 1 bis 10 und das Aussetzen gegenüber UV-Strahlung umfasst.

**14.** Verfahren zur Herstellung eines Trennpapiers oder -films, das Folgendes umfasst:

(a) Beschichten einer Silikontrennzusammensetzung auf ein behandeltes Papier- oder Filmsubstrat nach Anspruch 11 und Härten der Silikontrennzusammensetzung, oder
(b) Beschichten einer Oberfläche eines Papier- oder Filmsubstrats mit einer Primerzusammensetzung nach einem der Ansprüche 1 bis 10, Aussetzen gegenüber UV-Strahlung und anschließendes Beschichten einer Silikontrennzusammensetzung auf das geprimte Substrat und Härten der Silikontrennzusammensetzung.

**Revendications**

**1.** Composition d'apprêt siliconé qui est, lors de l'utilisation, revêtue sur un substrat en film plastique ou en papier et exposée aux UV pour former une couche d'apprêt devant être recouverte d'un revêtement durci d'une composition siliconée antiadhésive pour former un papier ou un film antiadhésif, la composition d'apprêt siliconé étant constituée de

(A) un composant conférant une adhérence qui est

(A1) un organopolysiloxane contenant, par molécule, au moins deux groupes substituants contenant un alcényle lié au silicium, ayant une teneur en alcényle de 0,3 à 2,0 mol/100 g, et ayant une structure dans laquelle deux motifs siloxane ayant un groupe substituant contenant un alcényle lié à un atome de silicium sont liés directement, ou via au plus 3 motifs siloxane intervenants n'ayant pas de groupe substituant contenant un alcényle lié à un atome de silicium, l'organopolysiloxane ayant une viscosité inférieure à 0,04 Pa.s à 25°C, et/ou
(A2) un composant contenant, par molécule, au moins un groupe substituant de 2 à 10 atomes de carbone ayant une liaison insaturée carbone-carbone (double ou triple liaison) en tant que fonctionnalité et au moins un groupe substituant ayant un groupe capable d'une réaction d'addition et/ou d'une réaction de condensation avec un groupe alcényle et/ou SiH ;

(B) éventuellement un solvant organique.

**2.** Composition d'apprêt selon la revendication 1, dans laquelle le composant (A1) est un organopolysiloxane représenté par la formule de composition (1) ayant une structure de formule générale (2), et ayant un degré moyen de polymérisation de 2 à 50,

$$[M]_{m1}[M^A]_{m2}[D]_{d1}[D^A]_{d2}[T]_{t1}[T^A]_{t2}[Q]_{q1} \qquad (1)$$

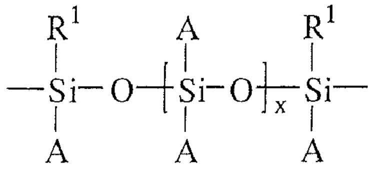 (2)

où $R^1$ est un groupe substituant contenant un alcényle de 2 à 10 atomes de carbone, A est $R^2$ ou un résidu siloxane lié via un atome d'oxygène et choisi de façon que la molécule satisfasse à la formule (1), sous réserve que deux groupes A connectés à un atome de silicium puissent former ensemble une structure cyclique $-O(SiR^2{}_2O)_y-$, $R^2$ est un groupe hydrocarboné monovalent substitué ou non substitué de 1 à 10 atomes de carbone, x est un entier de 0 à 3, y est un entier choisi de façon que l'organopolysiloxane de formule (1) ait un degré moyen de polymérisation de 2 à 50,
M, $M^A$, D, $D^A$, T, $T^A$ et Q sont des motifs siloxane tels que définis ci-dessous, $O_{1/2}$ indiquant que des motifs siloxane adjacents sont liés via un atome d'oxygène,
chacun de M et $M^A$ est :

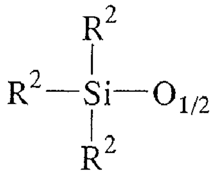 ,

$M^A$ étant un motif dans lequel au moins un $R^2$ est $R^1$,
chacun de D et $D^A$ est :

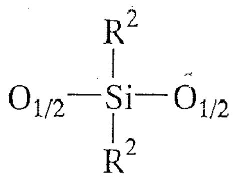 ,

$D^A$ étant un motif dans lequel au moins $R^2$ est $R^1$,
chacun de T et $T^A$ est :

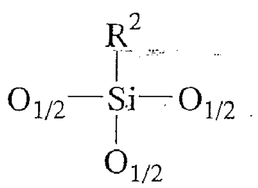 ,

$T^A$ étant un motif dans lequel $R^2$ est $R^1$,
Q est :

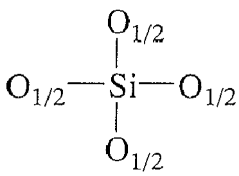 ,

m1, m2, d1, d2, t1, t2 et q1 sont des nombres satisfaisant aux relations :

$$t1+t2+2xq1 \leq m1+m2 \leq 2+t1+t2+2xq1$$

$$0 \leq d1+d2 \leq 48,\ 0 \leq t1+t2 \leq 30,\ 0 \leq q1 \leq 20,$$

$$0{,}25 \leq (m2+d2+t2)/(m1+m2+d1+d2+t1+t2+q1) \leq 1.$$

**3.** Composition d'apprêt selon la revendication 2, dans laquelle x dans la formule (2) vaut 0 ou 1.

**4.** Composition d'apprêt selon la revendication 2 ou 3, dans laquelle le composant (A1) est un composé de structure siloxane linéaire ou ramifiée répondant à la formule générale (3) ou (4) :

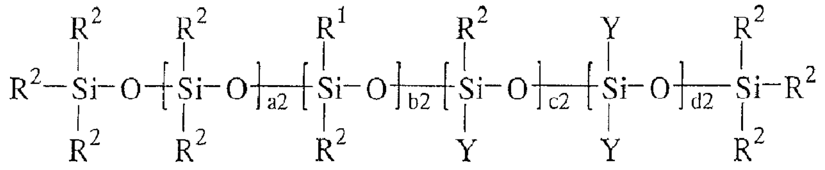
(3)

dans laquelle $R^1$ et $R^2$ sont tels que définis ci-dessus, Y est un groupe de formule (3a) suivante :

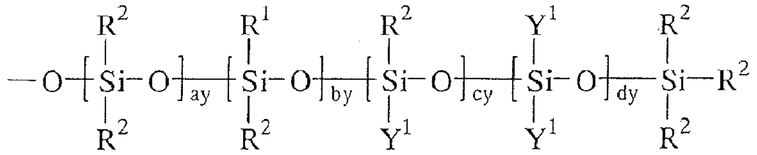
(3a)

dans laquelle $R^1$ et $R^2$ sont tels que définis ci-dessus, $Y^1$ est un groupe de formule (3b) suivante :

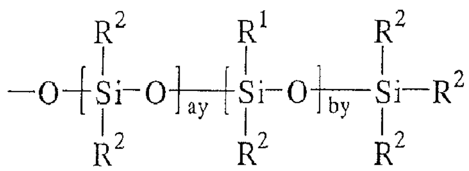
(3b)

dans laquelle $R^1$ et $R^2$ sont tels que définis ci-dessus,
chacun de a2, b2, ay et by est un entier de 0 à 48, chacun de c2 et cy est un entier de 0 à 30, chacun de d2 et dy est un entier de 0 à 20,

chacune des formules (3), (3a) et (3b) représente une structure aléatoire et englobe au moins une structure selon laquelle deux motifs siloxane dans lesquels le groupe substituant contenant un alcényle $R^1$ est lié à un atome de silicium sont liés directement ou via jusqu'à 3 motifs siloxane intervenants dans lesquels $R^1$ n'est pas lié à un atome de silicium,

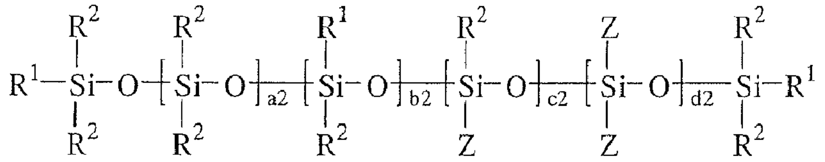
(4)

dans laquelle $R^1$ et $R^2$ sont tels que définis ci-dessus, Z est un groupe de formule (4a) suivante :

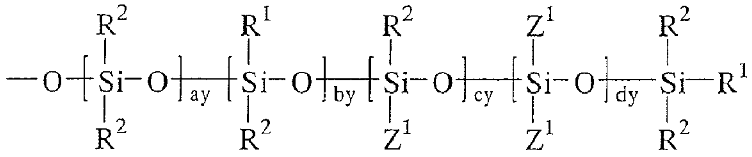

(4a)

dans laquelle $R^1$ et $R^2$ sont tels que définis ci-dessus, $Z^1$ est un groupe de formule (4b) suivante :

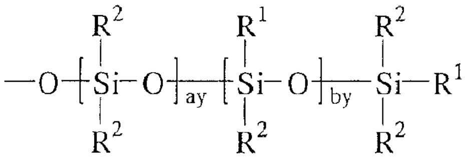

(4b)

dans laquelle $R^1$ et $R^2$ sont tels que définis ci-dessus,
chacun de a2, b2, ay et by est un entier de 0 à 48, chacun de c2 et cy est un entier de 0 à 30, chacun de d2 et dy est un entier de 0 à 20,
chacune des formules (4), (4a) et (4b) représente une structure aléatoire et englobe au moins une structure selon laquelle deux motifs siloxane dans lesquels le groupe substituant contenant un alcényle $R^1$ est lié à un atome de silicium sont liés directement ou via jusqu'à 3 motifs siloxane intervenants dans lesquels $R^1$ n'est pas lié à un atome de silicium.

**5.** Composition d'apprêt selon la revendication 2 ou 3, dans laquelle le composant (A1) est un composé de structure siloxane cyclique répondant à la formule générale (5) :

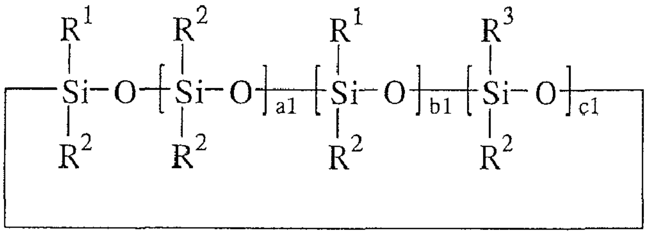

(5)

dans laquelle $R^1$ et $R^2$ sont tels que définis ci-dessus, $R^3$ est un groupe substituant ayant un groupe OH ou SiH en tant que fonctionnalité ou un groupe hydrocarboné monovalent substitué ou non substitué de 1 à 10 atomes de carbone exempt d'insaturation aliphatique, a1 vaut 0 ou 1, b1 est un entier de 1 à 6, c1 est un entier de 0 à 5, et a1+b1+c1 est un entier valant au moins 2.

**6.** Composition d'apprêt selon l'une quelconque des revendications 1 à 5, dans laquelle, dans le composant (A2),
le groupe substituant ayant une liaison insaturée carbone-carbone (double ou triple liaison) est un groupe substituant ayant un alcényle, alcynyle, acryloyloxy ou méthacryloyloxy, et
le groupe substituant ayant un groupe capable d'une réaction d'addition et/ou d'une réaction de condensation avec un groupe alcényle et/ou SiH est un groupe substituant ayant un groupe SiH, OH ou alcényle en tant que fonctionnalité.

**7.** Composition d'apprêt selon l'une quelconque des revendications 1 à 5, dans laquelle, dans le composant (A2), le groupe substituant ayant une liaison insaturée carbone-carbone (double ou triple liaison) est un groupe substituant de 2 à 10 atomes de carbone ayant un alcynyle, acryloyloxy ou méthacryloyloxy, et le groupe substituant ayant un groupe capable d'une réaction d'addition et/ou d'une réaction de condensation avec un groupe alcényle et/ou SiH est un groupe substituant ayant un groupe SiH, OH ou alcényle en tant que fonctionnalité.

**8.** Composition d'apprêt selon l'une quelconque des revendications 1 à 5, dans laquelle le composant (A2) est un composé contenant un motif structurel divalent répondant à la formule générale (6-1), un composé contenant des motifs structurels divalents répondant aux formules générales (6-2) et (6-3), un composé de structure cyclique répondant à la formule générale (7-1) ou un composé de structure cyclique répondant à la formule générale (7-2) :

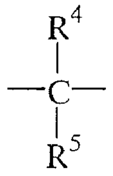

(6-1)

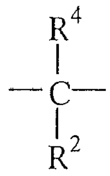

(6-2)

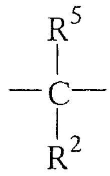

(6-3)

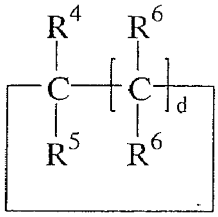

(7-1)

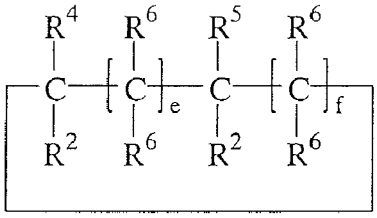

(7-2)

dans lesquelles $R^2$ est un groupe hydrocarboné monovalent substitué ou non substitué de 1 à 10 atomes de carbone, $R^4$ est un groupe substituant de 2 à 10 atomes de carbone contenant un alcynyle, acryloyloxy ou méthacryloyloxy, $R^5$ est un groupe substituant ayant un groupe OH, SiH ou alcényle en tant que fonctionnalité, $R^6$ est l'hydrogène, un groupe hydrocarboné saturé de 1 à 10 atomes de carbone ou un groupe aromatique, le même groupe que $R^4$, ou le même groupe que $R^5$, d vaut de 4 à 10, et e+f vaut de 3 à 9.

**9.** Composition d'apprêt selon l'une quelconque des revendications 1 à 8, dans laquelle la composition siliconée antiadhésive est du type à durcissement par réaction d'addition ou de condensation.

**10.** Composition d'apprêt selon l'une quelconque des revendications 1 à 9, comprenant en outre tout ou partie des composants de la composition siliconée antiadhésive.

**11.** Substrat en film ou en papier traité obtenu par revêtement d'une surface d'un substrat en film ou en papier avec une composition d'apprêt selon l'une quelconque des revendications 1 à 10 et exposition à un rayonnement UV, dans lequel la surface traitée va être recouverte d'un revêtement durci d'une composition siliconée antiadhésive pour former un film ou un papier antiadhésif.

**12.** Film ou papier antiadhésif comprenant un substrat en film ou en papier traité selon la revendication 11 et une composition siliconée antiadhésive déposée et durcie sur la surface du substrat traité.

**13.** Procédé pour produire un substrat en film ou en papier traité, utilisable dans la préparation d'un film ou papier antiadhésif par revêtement subséquent avec une composition siliconée antiadhésive, le procédé comprenant le revêtement d'une surface d'un substrat en film ou en papier avec une composition d'apprêt selon l'une quelconque des revendications 1 à 10 et l'exposition à un rayonnement UV.

**14.** Procédé pour produire un film ou un papier antiadhésif, comprenant

(a) la déposition d'une composition antiadhésive siliconée sur un substrat en film ou en papier traité selon la revendication 11, et le durcissement de la composition antiadhésive siliconée, ou
(b) le revêtement d'une surface d'un substrat en film ou en papier avec une composition d'apprêt selon l'une quelconque des revendications 1 à 10, son exposition à un rayonnement UV, et ensuite la déposition d'une composition antiadhésive siliconée sur le substrat apprêté et le durcissement de la composition antiadhésive siliconée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S6286061 A
- JP S63251465 A
- JP H0319267 B
- JP H0978032 A
- JP H11193366 A
- JP 2000169794 A
- JP 2000177058 A